(19) **Europäisches Patentamt European Patent Office Office européen des brevets**

(11) **EP 3 364 008 A1**

(12) **EUROPEAN PATENT APPLICATION**
published in accordance with Art. 153(4) EPC

(43) Date of publication:
**22.08.2018 Bulletin 2018/34**

(51) Int Cl.:
*F02B 41/10* (2006.01)          *B60K 6/48* (2007.10)
*B60R 16/033* (2006.01)        *B60W 10/26* (2006.01)
*B60W 20/00* (2016.01)         *F02D 23/00* (2006.01)

(21) Application number: **15906259.5**

(22) Date of filing: **15.10.2015**

(86) International application number:
**PCT/JP2015/079202**

(87) International publication number:
**WO 2017/064795 (20.04.2017 Gazette 2017/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Hitachi, Ltd.
Tokyo 100-8280 (JP)**

(72) Inventors:
• **INOUE, Takeshi
  Tokyo 100-8280 (JP)**
• **ORITA, Hisayuki
  Tokyo 100-8280 (JP)**

(74) Representative: **MERH-IP Matias Erny Reichl Hoffmann
Patentanwälte PartG mbB
Paul-Heyse-Strasse 29
80336 München (DE)**

(54) **TURBO REGENERATION SYSTEM**

(57)     A turbo regeneration system includes: a turbine system including a turbine that rotates in accordance with an exhaust air of an engine and a turbo regenerative generator that is driven by the turbine and generates electric power; an electricity storage system including a first electrical storage device that is charged with the electric power generated by the turbine system; a compressor system including an electric motor section that is driven by the electric power generated by the turbine system and a compression mechanism section that is rotated by the electric motor section and compresses an intake air to the engine; and an auxiliary machine electrical system including an auxiliary machine, wherein the turbine system, the compressor system, the electricity storage system, and the auxiliary machine electrical system are electrically connected in parallel.

*FIG. 2*

EP 3 364 008 A1

**Description**

Technical Field

The present invention relates to a turbo regeneration system.

Background Art

A supercharging device applied to an engine including a regenerative power generator (alternator) connected to an engine and an electrical storage device (battery) which is chargeable using regenerative power collected by the regenerative power generator is known (see PTL 1). The supercharging device rotationally drives a compressor element through a turbine element which is rotated by exhaust air of the engine and compresses an intake air through the compressor element. The supercharging device includes an electric motor section capable of rotationally driving the compressor element and control means that drives the electric motor section through regenerative power collected by the regenerative power generator in a case where the electrical storage device is in a fully charged state.

Citation List

Patent Literature

PTL 1: JP 2004-270602 A

Summary of Invention

Technical Problem

In a vehicle equipped with an engine to which a regenerative power generator (alternator) is connected, it is desirable to reduce an engine load applied by the regenerative power generator and improve a gasoline mileage.

Solution to Problem

A turbo regeneration system according to an aspect of the present invention includes: a turbine system including a turbine that rotates in accordance with an exhaust air of an engine and a turbo regenerative generator that is driven by the turbine and generates electric power; an electricity storage system including a first electrical storage device that is charged with the electric power generated by the turbine system; a compressor system including an electric motor section that is driven by the electric power generated by the turbine system and a compression mechanism section that is rotated by the electric motor section and compresses an intake air to the engine; and an auxiliary machine electrical system including an auxiliary machine, wherein the turbine system, the compressor system, the electricity storage system, and the auxiliary machine electrical system are electrically connected in parallel.

Advantageous Effects of Invention

According to the present invention, it is possible to reduce an engine load and improve a gasoline mileage.

Brief Description of Drawings

[FIG. 1] FIG. 1 is a diagram illustrating a schematic configuration of a turbo regeneration system according to a first embodiment.
[FIG. 2] FIG. 2 is a diagram illustrating a configuration of the turbo regeneration system according to the first embodiment.
[FIG. 3] FIG. 3 is a diagram illustrating a configuration of a turbo regeneration system according to a second embodiment.
[FIG. 4] FIG. 4 is a functional block diagram of a controller installed in a vehicle.
[FIG. 5] FIG. 5(a) illustrates a table for describing ON/OFF control of a parallel connection check flag decided by a combination of determination results obtained by a charging necessity determining unit and a charging rate determining unit, and FIG. 5 (b) illustrates a table (a first table) for describing ON/OFF control of a first switch and a second switch decided by a combination of determination result obtained by a charging necessity determining unit and a charging rate determining unit.

[FIG. 6] FIG. 6 is a diagram illustrating a relation between "power generation PG of a turbo regenerative generator - power consumption PC of an electric motor section" and an "engine rotating speed."

[FIG. 7] FIG. 7 is a table (a second table) for describing ON/OFF control of a first switch and a second switch decided by a combination of determination result obtained by a cross current determining unit, a charging power determining unit, and a charging necessity determining unit.

[FIG. 8] FIG. 8 is a flowchart illustrating an example of processing content by a switch switching process program executed by a controller according to the second embodiment.

[FIG. 9] FIG. 9 is a flowchart illustrating an example of processing content by a controller in a case where a charging mode is set.

[FIG. 10] FIG. 10 is a flowchart illustrating an example of processing content by a controller in a case where a discharging mode is set.

[FIG. 11] FIG. 11 is a diagram illustrating a configuration of a turbo regeneration system according to a third embodiment.

[FIG. 12] FIG. 12 is a functional block diagram of a controller according to the third embodiment.

[FIG. 13] FIG. 13 is a flowchart illustrating an example of processing content by an engine rotating speed control and voltage adjustment control process program executed by a controller according to the third embodiment.

[FIG. 14] FIG. 14 is a diagram illustrating a configuration of a turbo regeneration system according to a fourth embodiment.

[FIG. 15] FIG. 15 is a diagram illustrating a configuration of a turbo regeneration system according to a fifth embodiment.

[FIG. 16] FIG. 16 is a functional block diagram of a controller according to the fifth embodiment.

[FIG. 17] FIG. 17 is a flowchart illustrating an example of processing contents by a coexistence control program of turbo regeneration and deceleration regeneration executed by the controller according to the fifth embodiment.

[FIG. 18] FIG. 18 is a diagram illustrating a configuration of a turbo regeneration system according to a sixth embodiment.

[FIG. 19] FIG. 19 is a functional block diagram of a controller according to the sixth embodiment.

[FIG. 20] FIG. 20 is a flowchart illustrating an example of processing content by an engine rotating speed control and voltage adjustment control process program executed by the controller according to the sixth embodiment.

Description of Embodiments

-First embodiment-

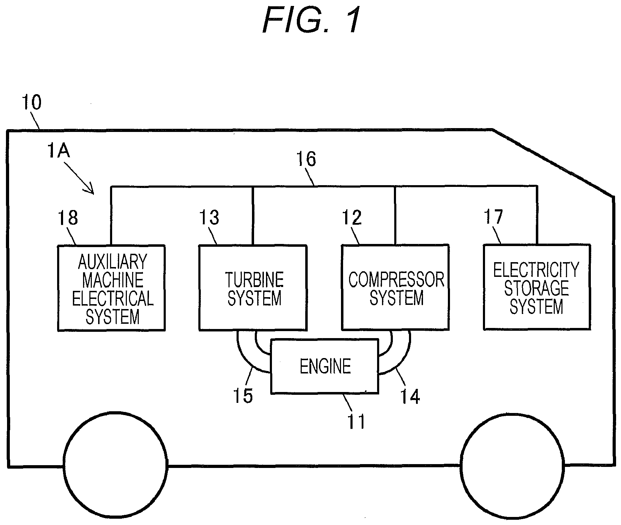

FIG. 1 is a diagram illustrating a schematic configuration of a turbo regeneration system 1A according to a first embodiment. As illustrated in FIG. 1, the turbo regeneration system 1A according to the present embodiment is applied to a hybrid vehicle (hereinafter referred to simply as a vehicle 10). The turbo regeneration system 1A includes an engine 11, a compressor system 12, a turbine system 13, an electricity storage system 17, an auxiliary machine electrical system 18, and a power bus 16. The turbine system 13, the compressor system 12, the electricity storage system 17, and the auxiliary machine electrical system 18 are electrically connected in parallel via the power bus 16.

The engine 11 sucks air from the outside via an intake pipe 14 and discharges exhaust air after burning to the outside via an exhaust pipe 15. The turbine system 13 supplies electric energy generated by energy of the exhaust air discharged to the exhaust pipe 15 to the electricity storage system 17, the compressor system 12, and the auxiliary machine electrical system 18 via the power bus 16.

The compressor system 12 supplies compressed air to the engine 11 via the intake pipe 14. The electricity storage system 17 is charged with high output power generated in the turbine system 13 and supplies electric power to the compressor system 12 and the auxiliary machine electrical system 18. The auxiliary machine electrical system 18 includes an electrical system of a 14 V system.

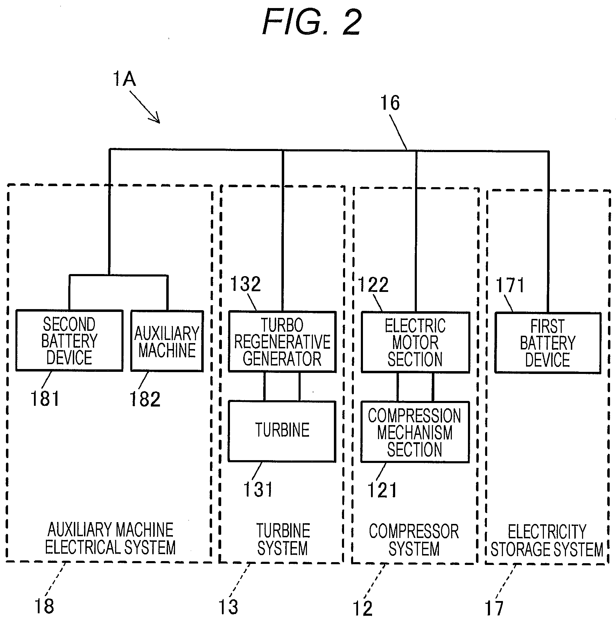

FIG. 2 is a diagram illustrating a configuration of the turbo regeneration system 1A according to the first embodiment, and the engine is not illustrated. As illustrated in FIG. 2, the turbine system 13 includes a turbine 131 and a turbo regenerative generator 132. The turbine 131 includes a plurality of turbine wings which are radially formed on a rotating shaft and is disposed in the exhaust pipe 15 (see FIG. 1) and rotationally driven by the energy of the exhaust air of the engine 11. The turbo regenerative generator 132 includes a stator and a rotor connected to the rotating shaft of the turbine 131 and is driven with the rotation of the turbine 131 to generate regenerative power.

The compressor system 12 includes a compression mechanism section 121 and an electric motor section 122 driven by electric power generated by the turbo regenerative generator 132. The electric motor section 122 includes a stator and a rotor connected to a rotating shaft of the compression mechanism section 121. The compression mechanism section 121 includes a plurality of compressor impellers which are radially formed on the rotating shaft and is disposed in the intake pipe 14 (see FIG. 1) and rotationally driven by the electric motor section 122 to compress the air sucked from the outside and then supply (that is, supercharge) the compressed air to the engine cylinder.

The auxiliary machine electrical system 18 includes a plurality of auxiliary machines 182 of a 14 V system such as a light, a navigation system, a starter (a sel-motor), and a second battery device 181 of a 14 V system, and the auxiliary machines 182 and the second battery device 181 are electrically connected in parallel. The second battery device 181 includes an inexpensive large capacity lead battery as an electrical storage element.

The electricity storage system 17 includes at least a first battery device 171. The first battery device 171 includes a lithium ion battery having smaller charging resistance than a lead battery, that is, having a good charging acceptability as an electrical storage element. In this specification, the charging resistance refers to internal resistance of the electrical storage element at the time of charging.

The first battery device 171 has a higher energy density and a smaller size than the second battery device 181. The capacity of the first battery device 171 is smaller than the capacity of the second battery device 181. For example, the capacity of the first battery device 171 (for example, about 5 [Ah]) is about 1/10 of the capacity of the second battery device 181 (for example, about 50 [Ah]). The second battery device 181 has a capacity [Ah] enough to secure electric power of a security device or the like parked for a long period of time and to start the engine 11 after long-term parking.

In the configuration in which the first battery device 171 and the second battery device 181 are connected in parallel as illustrated in FIG. 2, electric power of the first battery device 171 having the lithium ion battery is more preferentially supplied to the auxiliary machine 182 and the electric motor section 122 than the second battery device 181 having the lead battery in a short period of time in accordance with a circuit theory. In other words, in the present embodiment, charging and discharging by the first battery device 171 are mainly performed. For example, in a case where the vehicle 10 is in a stop state or in a decelerating state, the auxiliary machine 182 is driven by the electric power of the first battery device 171, and in a case where the vehicle 10 is in an accelerating state, the first battery device 171 is charged with the electric power generated by the turbo regenerative generator 132.

The turbo regenerative generator 132 is a three-phase AC generator, and generated AC power is full-wave rectified by a rectifying circuit (not illustrated) and becomes DC power. A voltage of the turbo regenerative generator 132 is restricted to 14 V by a voltage regulator (not illustrated). In the turbo regeneration system 1A according to the present embodiment, an upper limit voltage of the auxiliary machine electrical system 18, the turbine system 13, the compressor system 12, and the electricity storage system 17 is 14 V. In the present embodiment, the turbine 131 and the compression mechanism section 121 are not mechanically connected. Further, in the present embodiment, a regenerative power generator (hereinafter referred to as alternator) which is connected to the engine 11 and rotationally driven by the engine 11 to generate electric power is not installed.

In order to improve the gasoline mileage, the vehicle 10 according to the present embodiment causes the engine 11 to be stopped (idling-stopped) when the vehicle 10 is in the stop state, and stops a fuel injection when the vehicle 10 is in the decelerating state. In other words, when the vehicle 10 is in the stop state or the decelerating state, the turbo regeneration system 1A is stopped, and the electric power of the auxiliary machine 182 is supplied from the electricity storage system 17. When the vehicle 10 is constantly in a traveling state or the accelerating state, the turbo regeneration system 1A operates, the auxiliary machine 182 and the electric motor section 122 are driven by the electric power generated by the turbo regenerative generator 132, and the first battery device 171 and the second battery device 181 are charged with surplus power. The compressor system 12 is controlled in accordance with a control signal from a controller (not illustrated in FIG. 2).

According to the first embodiment, the following effects can be obtained.

(1) The turbo regeneration system 1A includes a turbine system 13 including a turbo regenerative generator 132 that is rotationally driven by a turbine 131 in accordance with an exhaust air of an engine 11 and generate electric power, an electricity storage system 17 including a first battery device 171 that is charged with the electric power generated by the turbine system 13, a compressor system 12 including a compression mechanism section 121 which is rotated by an electric motor section 122 rotationally rotated by the electric power generated by the turbine system 13 and compresses an intake air to the engine 11, and an auxiliary machine electrical system 18 including a plurality of auxiliary machines 182. In the turbo regeneration system 1A, the turbine system 13, the compressor system 12, the electricity storage system 17, and the auxiliary machine electrical system 18 are electrically connected in parallel.

According to the first embodiment, the electric power generated by the turbine system 13 can be supplied to the auxiliary machine electrical system 18. As a result, it is possible to omit the alternator which is connected to the engine 11 and rotationally driven by the engine 11 to generate electric power, and it is possible to reduce the size of the alternator. As a result, the engine load applied by the alternator can be reduced.

(2) The auxiliary machine electrical system 18 includes the second battery device 181 electrically connected in parallel to the auxiliary machine 182. The first battery device 171 has a lower charging resistance than the second battery device 181. As described above, the first battery device 171 and the second battery device 181 are electrically connected in parallel. According to the first embodiment, the auxiliary machine 182 is mainly driven by the electric power of the first battery device 171, for example, when the vehicle 10 is in the decelerating state or the stop state, and the first battery device 171 is charged with the electric power generated by the turbo regenerative generator 132 when the vehicle 10 is in the accelerating state. Since the configuration in which the first battery device 171 having a small charging resistance is frequently used is provided, the efficiency is better than the configuration in which the second battery device 181 having a large charging resistance is frequently used, and thus the gasoline mileage can be improved.

-Second embodiment-

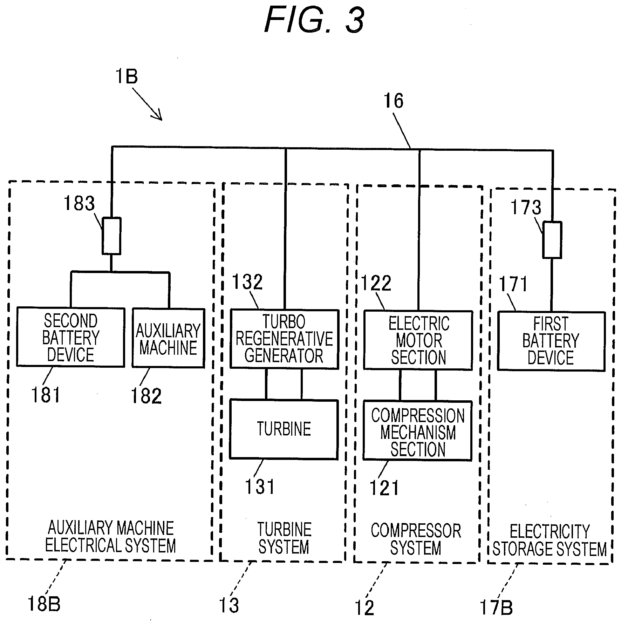

A turbo regeneration system 1B according to a second embodiment will be described with reference to FIGS. 3 to 10. In the drawings, parts which are identical or correspond to as those in the first embodiment are denoted by the same reference numerals, and the description will proceed focusing on different points. FIG. 3 is a diagram illustrating a configuration of the turbo regeneration system 1B according to the second embodiment. The second embodiment differs from the first embodiment in that a switching device that performs switching of causing the first battery device 171 and the second battery device 181 to enter the connected state or the non-connected state is installed.

The switching device according to the second embodiment includes a first switch 173 installed in an electricity storage system 17B and a second switch 183 installed in an auxiliary machine electrical system 18B. In a case where the first switch 173 and the second switch 183 are in the connected state, the first battery device 171 and the second battery device 181 are in the connected state. In a case where at least one of the first switch 173 and the second switch 183 is in the non-connected state, the first battery device 171 and the second battery device 181 are in the non-connected state.

The first switch 173 is installed between the power bus 16 and the first battery device 171 and performs switching of causing the first battery device 171, the turbine system 13, the compressor system 12, and the auxiliary machine electrical system 18B to enter the connected state or the non-connected state. The second switch 183 is installed between the power bus 16 and the second battery device 181 and performs switching of causing the second battery device 181, the turbine system 13, the compressor system 12, and the electricity storage system 17B to enter the connected state or the non-connected state. ON and OFF states of the first switch 173 and the second switch 183, that is, the connected state and the non-connected state (disconnected state) are controlled by a controller 200. The first switch 173 and the second switch 183 are also referred to collectively as a switch.

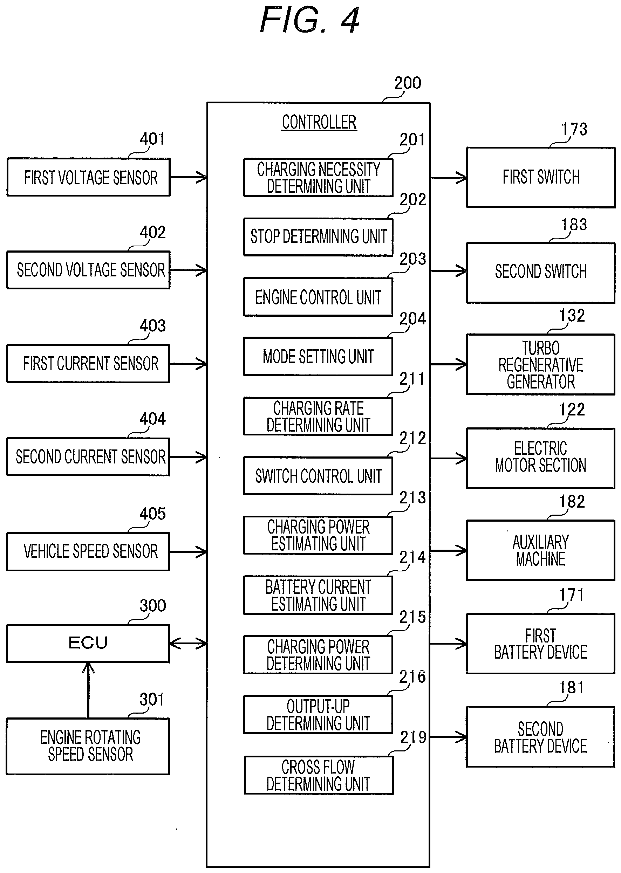

FIG. 4 is a functional block diagram of the controller 200 installed in the vehicle 10. An engine controller 300 is connected to the controller 200. Each of the controller 200 and the engine controller 300 are configured with an operation processing device including a CPU, a storage device such as a ROM and a RAM, other peripheral circuits, and the like.

An engine rotating speed sensor 301 is connected to the engine controller 300. The engine rotating speed sensor 301 detects an actual rotating speed of the engine 11 and outputs a detection signal to the engine controller 300. The engine controller 300 compares the actual rotating speed of the engine 11 detected by the engine rotating speed sensor 301 with a target rotating speed of the engine 11 (an instruction value) from the controller 200 and controls a fuel injection device (not illustrated) such that the actual rotating speed of the engine 11 is brought closer to the target rotating speed. Information of the actual rotating speed of the engine 11 is also input to the controller 200 via a local area network (LAN) of the vehicle 10.

A first voltage sensor 401 and a second voltage sensor 402 are connected to the controller 200. The first voltage sensor 401 detects a terminal voltage of the first battery device 171 and outputs a detection signal to the controller 200. The second voltage sensor 402 detects a terminal voltage of the second battery device 181 and outputs a detection signal to the controller 200.

A first current sensor 403 and a second current sensor 404 are connected to the controller 200. The first current sensor 403 detects an electric current flowing to the first battery device 171 and outputs a detection signal to the controller 200. The second current sensor 404 detects an electric current flowing to the second battery device 181 and outputs a detection signal to the controller 200.

A vehicle speed sensor 405 is connected to the controller 200. The vehicle speed sensor 405 detects the speed of the vehicle 10 and outputs a detection signal to the controller 200.

The controller 200 functionally includes a charging necessity determining unit 201, a stop determining unit 202, an engine control unit 203, a mode setting unit 204, a charging rate determining unit 211, a switch control unit 212, a charging power estimating unit 213, a battery current estimating unit 214, a charging power determining unit 215, and an output-up determining unit 216.

In a case where any one of a (condition 1A) and a (condition 1B) below is satisfied, the charging necessity determining unit 201 determines that it is necessary to charge the first battery device 171. In a case where neither the (condition 1A) nor the (condition 1B) is satisfied, the charging necessity determining unit 201 determines that it is not necessary to charge the first battery device 171.

(Condition 1A) charging rate Cp of first battery device < lower limit value Cp1
(Condition 1B) dischargeable power Dp of first battery device < lower limit value Dp1

The lower limit value Cp1 is a numerical value obtained by an experiment so that the electrical storage element of the first battery device 171 does not deteriorate at the time of long-term parking and stored in a storage device in advance. In the present embodiment, the lower limit value Cp1 is set to about 30%. In a case where the electrical storage element of the first battery device 171 is configured with a lithium ion capacitor instead of a lithium ion battery, the lower limit value Cp1 is set to 0% since the capacitor does not deteriorate. In a case where the electrical storage element of the first battery device 171 is configured with a nickel hydride battery, the lower limit value Cp1 is preferably set to about 30%.

An arbitrary method can be used as a method of estimating the charging rate. For example, a charging rate estimation method disclosed in JP 2005-83798 A or JP 2002-189066 A can be used. The charging rate may be estimated by a technique using a Kalman filter disclosed in reference document "Shuichi Adachi and Ichiro Murata Log: Basics of Kalman filter, Tokyo Denki University Press, March 10, 2013, First Edition."

Higher electric power out of electric power for activating the electric motor section 122 of the compressor system 12 and electric power for activating the auxiliary machine 182 having the highest necessary electric power at the time of activation (for example, the starter) among a plurality of auxiliary machines 182 is employed as the lower limit value Dp1.

In a case where any one of a (condition 2A) and a (condition 2B) below is satisfied, the charging necessity determining unit 201 determines that it is necessary to charge the second battery device 181. In a case where neither the (condition 2A) nor the (condition 2B) is satisfied, the charging necessity determining unit 201 determines that it is not necessary to charge the second battery device 181.

(Condition 2A) charging rate Cc of second battery device < lower limit value Cc1
(Condition 2B) dischargeable power Dc of second battery device < lower limit value Dc1

The lower limit value Cc1 is a numerical value obtained by an experiment so that the electrical storage element of the second battery device 181 does not deteriorate at the time of long-term parking and stored in a storage device in advance. In the present embodiment, the lower limit value Cc1 is set at to about 80%. In a case where the electrical storage element of the second battery device 181 is configured with a nickel-zinc battery instead of a lead battery, the lower limit value Cc1 is preferable set to about 70%.

For example, electric power (for example, 3 [kW]) necessary for driving the starter in a case where a starter is included in a plurality of auxiliary machines 182 is set as the lower limit value Dc1.

The dischargeable powers Dp and Dc are set in advance as electric power for causing an electric current to flow through the battery continuously flow from a viewpoint of battery protection and stored in the storage device. For example, 2 [kW] is set if it is discharged for 1 second, 1 [kW] is set if it is discharged for 5 seconds, 0.5 [kW] is set if it is discharged for 10 seconds, and 300 [W] is set it is discharged for more than 10 seconds.

The dischargeable power Dc of the second battery device 181 may be set by the following Formula (1).

$$Dc = Vm \times V2/(rd + R) \quad \ldots \quad (1)$$

Here, Vm indicates a minimum voltage [V] necessary for driving the auxiliary machine 182, and for example, 7.2 [V] is set as a minimum voltage which can be cranked in advance. V2 indicates an open circuit voltage (OCV) of the second battery device 181. rd indicates an internal resistance [$\Omega$] of the second battery device 181.

R indicates a minimum resistance value [$\Omega$] of the auxiliary machine 182 (for example, the starter). A previously measured value is stored in the storage device as R. The controller 200 may drive the starter several times, acquire information of a voltage and an electric current before the starter is driven and a voltage and an electric current when the starter is driven, calculate a voltage difference/current difference - rd, and cause an average value thereof to be stored (learned) as R.

The stop determining unit 202 determines whether or not the vehicle 10 is in the stop state, that is, whether the vehicle 10 is not in the traveling step. The stop determining unit 202 determines whether or not the speed of the vehicle 10 (hereinafter referred to as a vehicle speed v) is equal to or less than a threshold value v0. The stop determining unit 202 determines that the vehicle 10 is in the stop state in a case where the vehicle speed v is equal to or less than the threshold value v0 and determines the vehicle 10 is in the traveling state in a case where the vehicle speed v is larger than the threshold value v0. The threshold value v0 is a threshold value for determining whether or not the vehicle 10 is in the stop state, and for example, 0 or a value close to 0 (for example, 0.5 km/h) is employed and stored in the storage device in advance.

In a case where the charging necessity determining unit 201 determines that it is necessary to charge at least one of the first battery device 171 and the second battery device 181, that is, in a case where any one of the condition 1A, the condition 1B, the condition 2A, and the condition 2B is satisfied, the engine control unit 203 outputs an engine ON signal to the engine controller 300. Upon receiving the engine ON signal, the engine controller 300 starts the engine 11.

In a case where the charging necessity determining unit 201 determines that it is necessary to charge neither the first battery device 171 nor the second battery device 181, and the stop determining unit 202 determines that the vehicle 10 is in the stop state, the engine control unit 203 outputs an OFF signal (an idling stop signal) to the engine controller 300. Upon receiving the engine OFF signal, the engine controller 300 stops the engine 11.

The mode setting unit 204 determines whether or not the charging power P is equal to or larger than 0, sets the charging mode in a case where the charging power P is equal to or larger than 0 ($P \geq 0$), and sets the discharging mode in a case where the charging power P is less than 0 (P<0). The charging power P is calculated by the charging power estimating unit 213 to be described later.

The charging rate determining unit 211 determines whether or not the charging rate Cp of the first battery device 171 reaches an upper limit value Cp2. The charging rate determining unit 211 determines whether or not the charging rate Cc of the second battery device 181 reaches an upper limit value Cc2. The upper limit values Cp2 and Cc2 are stored in the storage device in advance.

If the charging mode is set, the switch control unit 212 controls ON/OFF of the first switch 173 and the second switch 183. This will be described below in detail.

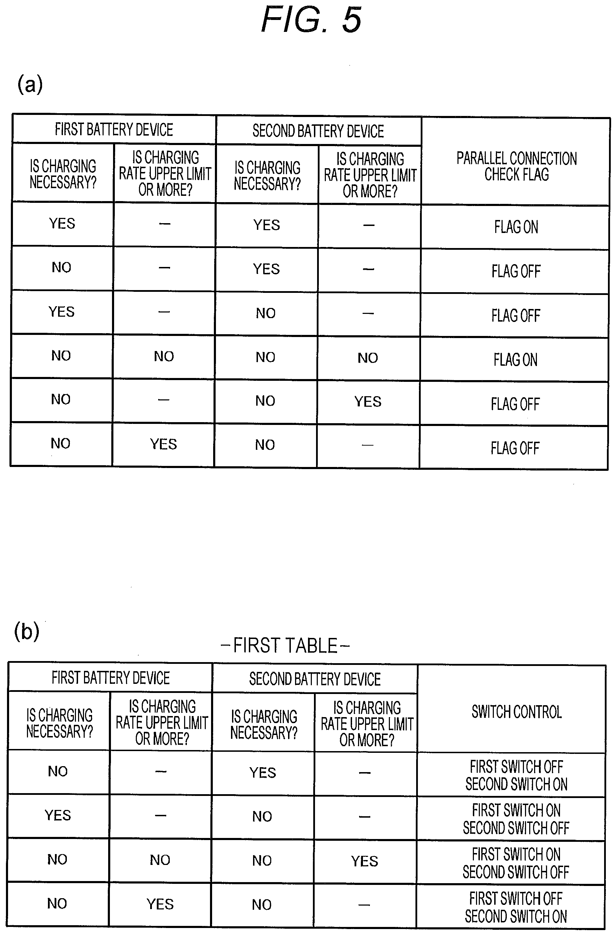

FIG. 5(a) is a table for describing ON/OFF control of a parallel connection check flag decided by a combination of determination results obtained by the charging necessity determining unit 201 and the charging rate determining unit 211. Prior to switching control of the switch, the switch control unit 212 determines whether or not the parallel connection check flag is set to ON the basis of the determination result obtained by the charging necessity determining unit 201 and the determination result obtained by the charging rate determining unit 211.

The switch control unit 212 sets the parallel connection check flag to ON in a case where the charging necessity determining unit 201 determines that it is necessary to charge both the first battery device 171 and the second battery device 181. The switch control unit 212 sets the parallel connection check flag to OFF in a case where the charging necessity determining unit 201 determines that it is necessary to charge only one of the first battery device 171 and the second battery device 181.

In a case where the charging necessity determining unit 201 determines that it is not necessary to charge both the first battery device 171 and the second battery device 181, the switch control unit 212 sets the parallel connection check flag to ON when a (condition 3) below is satisfied, and sets the parallel connection check flag to OFF when the (condition 3) is not satisfied.

(Condition 3) the charging rate Cp of the first battery device 171 is less than the upper limit value Cp2, and the charging rate Cc of the second battery device 181 is less than the upper limit value Cc2.

FIG. 5(b) is a table (hereinafter referred to as a "first table") for describing the ON/OFF control of the first switch 173 and the second switch 183 decided by a combination of determination results obtained by the charging necessity determining unit 201 and the charging rate determining unit 211. A control signal for causing a switch to enter the connected state is indicated by a switch ON signal, and a control signal for disconnecting a switch, that is, a control signal for causing the switch to enter the disconnected state is indicated by a switch OFF signal.

In a case where the parallel connection check flag is OFF, the switch control unit 212 performs the ON/OFF control of the switch on the basis of the first table illustrated in FIG. 5 (b). The ON/OFF control of the switch in a case where the parallel connection check flag is ON will be described later.

In a case where it is determined that it is not necessary to charge the first battery device 171, and it is necessary to charge the second battery device 181, the switch control unit 212 outputs the switch OFF signal to the first switch 173 and outputs the switch ON signal to the second switch 183.

In a case where it is determined that it is necessary to charge the first battery device 171, and it is not necessary to charge the second battery device 181, the switch control unit 212 outputs the switch ON signal to the first switch 173 and outputs the switch OFF signal to the second switch 183.

Control content of the switch control unit 212 in a case where it is determined that it is necessary to charge neither the first battery device 171 nor the second battery device 181 will be described below.

When the charging rate Cp of the first battery device 171 is less than the upper limit value Cp2, and the charging rate of the second battery device 181 is equal to or larger than the upper limit value Cc2, the switch control unit 212 outputs the switch ON signal to the first switch 173 and output the switch OFF signal to the second switch 183.

In a case where the charging rate Cp of the first battery device 171 is equal to or larger than the upper limit value Cp2, the switch control unit 212 outputs the switch OFF signal to the first switch 173 and outputs the switch ON signal to the second switch 183 regardless of the charging rate Cc of the second battery device 181.

The ON/OFF control of the switch in a case where the parallel connection check flag is ON will be described below. If the parallel connection check flag is set to ON, the charging power P is estimated and calculated by the charging power estimating unit 213, and the charging power determining unit 215 determines whether or not the charging power P is equal to or less than a threshold value P1. Further, the battery current estimating unit 214 estimates and calculates battery currents of the first battery device 171 and the second battery device 181, and a cross current determining unit 219 determines whether or not a cross current occurs on the basis of a calculation result. The switch control unit 212 performs the ON/OFF control of the switch on the basis of the determination results obtained by the charging necessity determining unit 201, the cross current determining unit 219, and the charging power determining unit 215.

The charging power estimating unit 213 estimates the charging power P [W] in accordance with the following Formula (2) .

$$P = PG - PC - PA \ldots (2)$$

Here, PG indicates the power generation of the turbo regenerative generator 132, PC indicates the power consumption of the electric motor section 122 which drives the compression mechanism section 121, and PA indicates a sum of the power consumptions of a plurality of auxiliary machines 182.

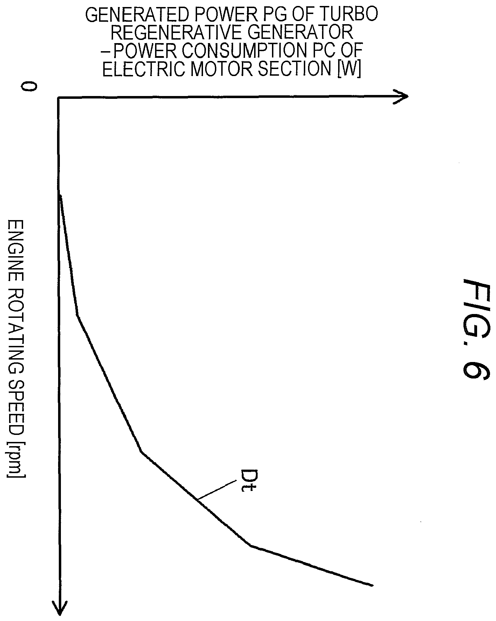

The charging power estimating unit 213 estimates the "power generation PG of the turbo regenerative generator - the power consumption PC of the electric motor section" of Formula (2) on the basis of the rotating speed of the engine 11. FIG. 6 is a diagram illustrating a relation between the "power generation PG of the turbo regenerative generator - the power consumption PC of the electric motor section" and the "engine rotating speed." A table Dt of FIG. 6 is generated by a bench test of the engine 11 in advance on the basis of a measurement result of a difference between the power generation PG of the turbo regenerative generator 132 and the power consumption PC of the electric motor section 122 which drives the compression mechanism section 121 at the predetermined engine rotating speed. The table Dt is stored in the storage device of the controller 200 in advance.

The charging power estimating unit 213 estimates the difference (PG - PC) between the power generation PG of the turbo regenerative generator 132 and the power consumption PC of the electric motor section 122 on the basis of the engine rotating speed detected by the engine rotating speed sensor 301 with reference to the table Dt.

The charging power estimating unit 213 estimates the "power consumption PA of the auxiliary machines 182" of Formula (2) as follows. The charging power estimating unit 213 reads ON/OFF information of each auxiliary machine 182 flowing in the LAN of the vehicle 10. A power table including information of the power consumption associated with each of a plurality of auxiliary machines 182 is stored in the storage device of the controller 200 in advance. The charging power estimating unit 213 estimates the power consumption PA of the auxiliary machines 182 on the basis of the read ON/OFF information of each auxiliary machine 182 with reference to the power table.

The battery current estimating unit 214 estimates an electric current flowing through the first battery device 171 (hereinafter referred to as a battery current i1) and an electric current flowing through the second battery device 181 (hereinafter referred to as a battery current i2) in a case where the first battery device 171 and the second battery device 181 are connected in parallel.

The battery current is derived from an equation "electric current flowing through battery device × terminal voltage of battery device = power generation PG of turbine system 13 - power consumption PC of electric motor section 122 - power consumption PA of auxiliary machines 182 = charging power P. " Specifically, the battery current estimating unit 214 estimates the battery current i1 [A] using Formula (3A) and estimates the battery current i2 [A] using Formula (3B).

$$i1 = (V - V1)/r1 \ldots (3A)$$

$$i2 = (V - V2)/r2 \ldots (3B)$$

Here, V1 is an open circuit voltage (OCV) [V] of the first battery device 171 and indicated by Formula (7). V2 is an open circuit voltage (OCV) [V] of the second battery device 181 and indicated ted by Formula (8). r1 is a sum of the internal resistance [Ω] of the first battery device 171 and the resistance [Ω] of the first switch 173. r2 is a sum of the internal resistance [Ω] of the second battery device 181 and the resistance [Ω] of the second switch 183.

The resistance values of the internal resistances r1 and r2 are measured in advance and stored in the storage device of the controller 200. The controller 200 may estimate the internal resistances r1 and r2 through a calculation on the basis of a change in a voltage and a change in an electric current when the first switch 173 and the second switch 183 are turned on and off.

V in Formulas (3A) and (3B) is indicated by Formula (4) .

[Mathematical Formula 1]

$$V = \max\left\{\left(Vb + \sqrt{Vb \times Vb + 4 \times r \times P}\right)/2, V0\right\} \quad \cdots \quad (4)$$

Here, V0 is an upper limit voltage [V] of the turbo regenerative generator 132. Vb is a composite voltage of the first battery device 171 and the second battery device 181 and indicated by Formula (5). r is a composite resistance of the first battery device 171 and the second battery device 181 and indicated by Formula (6).

$$Vb = (r2 \times V1 + r1 \times V2)/(r1 + r2) \quad \ldots \quad (5)$$

$$R = r1 \times r2/(r1 + r2) \quad \ldots \quad (6)$$

The open circuit voltage V1 is indicated by Formula (7), and the open circuit voltage V2 is indicated by Formula (8).

$$V1 = v1 - r1 \times I1 \quad \ldots \quad (7)$$

$$V2 = v2 - r2 \times I2 \quad \ldots \quad (8)$$

Here, v1 is the terminal voltage [V] of the first battery device 171 detected by the first voltage sensor 401, and v2 is the terminal voltage [V] of the second battery device 181 detected by the second voltage sensor 402. I1 is the electric current [A] of the first battery device 171 detected by the first current sensor 403, and I2 is the electric current [A] of the second battery device 181 detected by the second current sensor 404. Note that i1, i2, I1, and I2 indicate the current values on the charging side if they have a positive value and the current values on the discharging side if they have a negative value.

On the basis of the battery currents i1 and i2 calculated by the battery current estimating unit 214, the cross current determining unit 219 determines whether there is a possibility of the occurrence of a cross current in a case where each of the first switch 173 and the second switch 183 enters the connected state. The "cross current" refers to a complicated electric current generated between the first battery device 171 and the second battery device 181, and if the cross current occurs, a large loss is likely to occur in Joule heat caused by the internal resistance of the battery device. The cross current occurs, for example, when an operation of consuming large electric power is instantaneously performed (for example, when the engine 11 starts) . The cross current determining unit 219 estimates that there is no possibility of the occurrence of the cross current in a case where both the battery current i1 and the battery current i2 have the positive value. The cross current determining unit 219 estimates that there is a possibility of the occurrence of the cross current in a case where the battery current i1 has a positive value, and the battery current i2 has a negative value. The cross current determining unit 219 estimates that there is a possibility of the occurrence of the cross current in a case where the battery current i1 has a negative value, and the battery current i2 has a positive value.

The charging power determining unit 215 determines whether or not the charging power P is equal to or less than the threshold value P1. The threshold value P1 is decided in advance by the electric energy (capacity) stored in the first battery device 171 and a duration at the time of high rotation and high output and stored in the storage device.

Specifically, an example of a method of deciding the threshold value P1 will be described. The electric energy (capacity) of the first battery device 171 is assumed to be 70 [Wh] in total. In a case where a range of a use charging rate of the first battery device 171 is 30 [%] to 70 [%], usable electric energy is 32 [Wh] (= 70 × 0.4). The duration time in which the turbine system 13 generates 1 kW or more is assumed to be 115 seconds in a traveling pattern which is assumed in advance. In this case, if the first battery device 171 is fully charged at 1 [kW] for 115 [seconds], 1 [kW] is set as the threshold value. The electric energy necessary for single power generation may be inspected in advance, and the threshold value P1 may be set so that the capacity of the first battery device 171 becomes full.

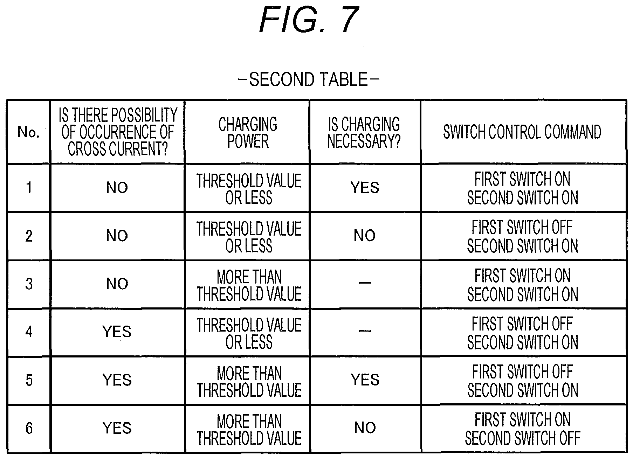

FIG. 7 is a table (hereinafter referred to as a "second table") for describing the ON/OFF control of the first switch 173 and the second switch 183 decided by a combination of determination results obtained by the cross current determining unit 219, the charging power determining unit 215, and the charging necessity determining unit 201.

If the parallel connection check flag is set to ON, the switch control unit 212 performs the ON/OFF control of the switch on the basis of the determination results obtained by the cross current determining unit 219, the charging power determining unit 215, and the charging necessity determining unit 201 with reference to the second table illustrated in FIG. 7. As described above, the case in which the parallel connection check flag is set to ON is a case in which it is determined that it is necessary or not necessary to charge both the first battery device 171 and the second battery device 181 as illustrated in FIG. 5.

Control (control 1 and control 2) by the switch control unit 212 in a case where the cross current determining unit 219 determines that there is no possibility of the occurrence of the cross current, and the charging power P is determined to be equal to or less than the threshold value P1 is as follows. (Control 1) In a case where the switch control unit 212 determines that it is necessary to charge both the first battery device 171 and the second battery device 181, the switch control unit 212 outputs the switch ON signal to each of the first switch 173 and the second switch 183. This is because it is preferable to increase the charging rate of each of the two battery devices in a case where there is not possibility of the occurrence of the cross current, and it is necessary to charge both battery devices.

(Control 2) In a case where it is determined that it is necessary to charge neither the first battery device 171 nor the second battery device 181, the switch control unit 212 outputs the switch OFF signal to the first switch 173 and outputs the switch ON signal to the second switch 183. The second battery device 181 has a large charging resistance, and it takes time to increase the charging rate. Therefore, it is preferable to charge the second battery device 181 even in a case where it is not necessary to charge the second battery device 181. On the other hand, it is preferable that the first battery device 171 secure a chargeable capacity to some extent so that the turbo regenerative generator 132 rotates at a high speed, and charging can be performed when the charging power P exceeds the threshold value P1. The switch ON signal may be output to each of the first switch 173 and the second switch 183.

(Control 3) In a case where the cross current determining unit 219 determines that there is no possibility of the occurrence of the cross current, and the charging power P is determined to be larger than the threshold value P1, the switch control unit 212 outputs the switch ON signal to each of the first switch 173 and the second switch 183. Since the first battery device 171 has a smaller capacity than the second battery device 181, there are cases in which the first battery device 171 are fully charged immediately. For this reason, it is preferable to charge the second battery device 181 in order to prevent a situation in which the electric power is unable to be absorbed.

In a case where the cross current determining unit 219 determines that there is a possibility of the occurrence of the cross current, the switch control unit 212 outputs the switch ON signal to one of the first switch 173 and the second switch 183 in order to prevent the occurrence of cross current and outputs the switch OFF signal to the other switch so that the first battery device 171 and the second battery device 181 enter the non-connected state. Control (control 4 to control 6) by the switch control unit 212 in a case where the cross current determining unit 219 determines that there is a possibility of the occurrence of the cross current is as follows.

(Control 4) In a case where the charging power P is determined to be equal to or less than the threshold value P1, the switch control unit 212 outputs the switch OFF signal to the first switch 173 and outputs the switch ON signal to the second switch 183. The charging resistance of the second battery device 181 is larger than the charging resistance of the first battery device 171, but in a case where the charging power P is smaller, the influence of the charging resistance on the increase in the charging rate is smaller than in a case where the charging power P is larger. Therefore, in a case where the charging power P is small, the second battery device 181 having a larger charging resistance is preferentially charged.

(Control 5) In a case where the charging power P is determined to be larger than the threshold value P1, and it is determined that it is necessary to charge both of the first battery device 171 and the second battery device 181, the switch control unit 212 outputs the switch OFF signal to the first switch 173 and outputs the switch ON signal to the second switch 183. As described above, the second battery device 181 needs a battery capacity enough to secure the electric power of the security device or the like at the time of long-term parking and start the engine 11 after the long-term parking. Therefore, in a case where it is necessary to charge the second battery device 181, even if the charging power P is high, and the influence of the charging resistance on the increase in charging rate is large, that is, even if the loss is large, it is determined to be urgent, and thus the second battery device 181 is charged.

(Control 6) In a case where that the charging power P is determined to be larger than the threshold value P1 and it is determined that it is necessary to charge neither the first battery device 171 nor the second battery device 181, the switch control unit 212 outputs the switch ON signal to the first switch 173 and outputs the switch OFF signal to the second switch 183. In a case where the charging power P is large, since the influence of the charging resistance on the increase of the charging rate is large, the first battery device 171 with a small charging resistance is preferentially charged.

If the discharging mode is set, the switch control unit 212 outputs the switch ON signal to the first switch 173 and outputs the switch OFF signal to the second switch 183. In the discharging mode, the electric power from the first battery device 171 is supplied to the electric motor section 122, and the electric power from the second battery device 181 is supplied to the auxiliary machine 182.

The output-up determining unit 216 determines whether or not the output-up of the turbo regenerative generator 132 is necessary. Whether or not the output-up of the turbo regenerative generator 132 is necessary means whether or not it is necessary to switch the whole system of the vehicle 10 to the charging mode or whether or not a termination condition of the discharging mode is satisfied.

In a case where it is determined that it is necessary to charge at least one of the first battery device 171 and the second battery device 181, that is, in a case where any one of the (condition 1A), the (condition 1B), the (condition 2A), and the (condition 2B) is satisfied, the output-up determining unit 216 determines that the output-up of the turbo regenerative generator 132 is necessary.

In a case where the output-up of the turbo regenerative generator 132 is determined to be necessary, the engine control unit 203 determines whether or not the engine 11 is in an OFF state on the basis of information flowing in the LAN of the vehicle 10 (that is, whether it is in the idling stop state). In a case where the engine 11 is in the OFF state, the engine control unit 203 outputs the control signal (the engine ON signal) for starting the engine 11 to the engine controller 300.

In a case where the engine is in an ON state, the engine control unit 203 outputs a control signal for increasing the rotating speed of the engine 11 to the engine controller 300. It is possible to increase the power generation of the turbo regenerative generator 132 by increasing the rotating speed of the engine 11. In a state in which the engine 11 and the wheels are connected by a clutch (for example, in the traveling state), as the rotating speed of the engine 11 increases, the wheel speed increases. Therefore, it is preferable to employ a continuously variable transmission (CVT) and perform control such that a target wheel speed is reached by changing a transmission gear ratio of the CVT.

The mode setting unit 204 terminates the discharging mode in a case where the output-up of the turbo regenerative generator 132 is determined to be unnecessary.

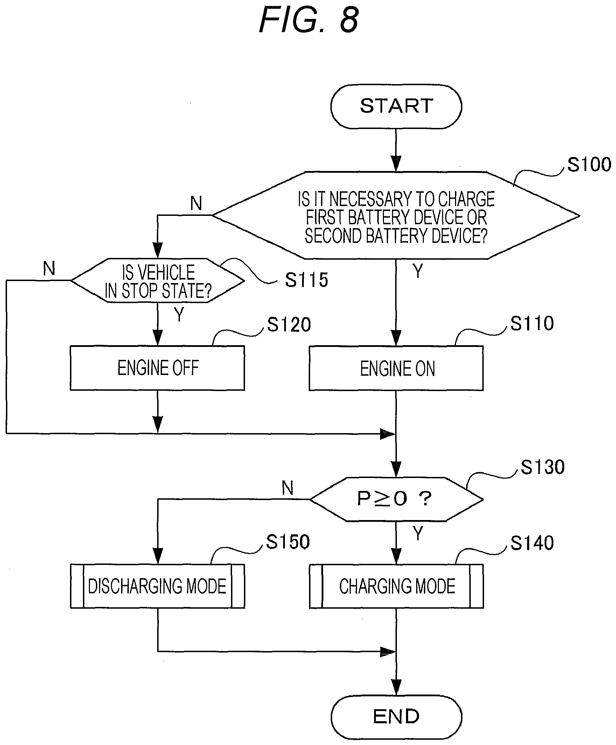

FIGS. 8 to 10 are flowcharts illustrating an example of processing content by the switch switching process program executed by the controller 200 according to the second embodiment. A process illustrated in the flowchart of FIG. 8 is started when an ignition switch (not illustrated) is turned on and repeatedly executed with a predetermined control cycle. Further, the controller 200 monitors whether or not the ignition switch is turned off and ends the process illustrated in FIG. 8 in a case where the ignition switch is turned off. Although not illustrated, acquisition of information such as the charging rate, the terminal voltage, the engine rotating speed, the vehicle speed, or the like of the first battery device 171 and the second battery device 181 is repeated with a control cycle.

In step S100, the controller 200 determines whether or not it is necessary to charge at least one of the first battery device 171 and the second battery device 181. If a positive determination is obtained in step S100, the process proceeds to step S110, and if a negative determination is obtained in step S100, the process proceeds to step S115.

In step S110, the controller 200 outputs the engine ON signal to the engine controller 300, and the process proceeds to step S130. In step S115, the controller 200 determines whether or not the vehicle 10 is in the stop state. If a positive determination is obtained in step S115, the process proceeds to step S120, and if a negative determination is obtained in step S115, the process proceeds to step S130.

In step S120, the controller 200 outputs the engine OFF signal to the engine controller 300, and the process proceeds to step S130.

In step S130, the controller 200 determines whether or not the charging power P is 0 or more. If a positive determination is obtained in step S130, the process proceeds to step S140, and if a negative determination is obtained in step S130, the process proceeds to step S150.

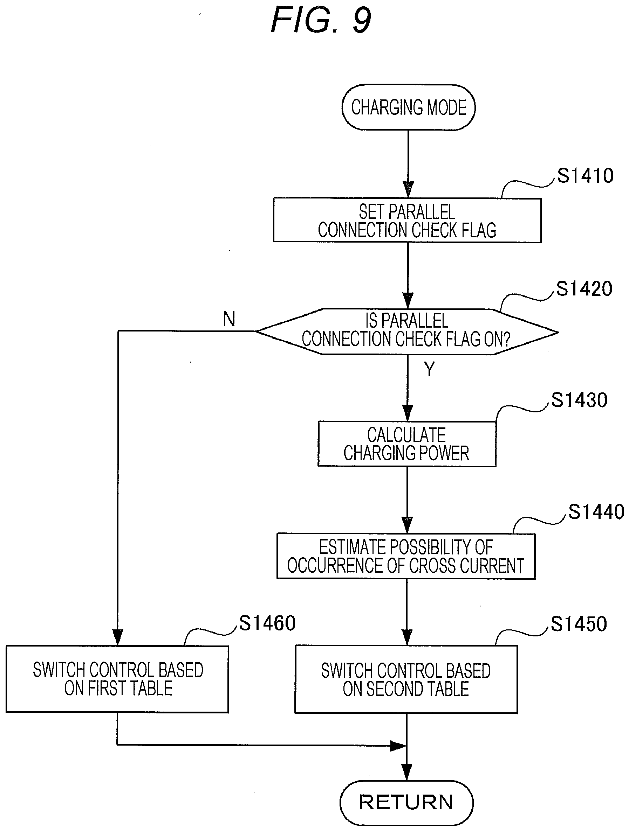

In step S140, the controller 200 sets the charging mode. FIG. 9 illustrates an example of processing content by the controller 200 in a case where the charging mode is set. If the charging mode is set, a process illustrated in the flowchart of FIG. 9 is executed.

In step S1410, the controller 200 sets the parallel connection check flag (to ON or OFF), and the process proceeds to step S1420. In step S1420, the controller 200 determines whether or not the parallel connection check flag is ON. If a positive determination is obtained in step S1420, the process proceeds to step S1430. If a negative determination is obtained in step S1420, the process proceeds to step S1460.

In step S1430, the controller 200 calculates the charging power P, and the process proceeds to step S1440. In step S1440, the controller 200 estimates a possibility of the occurrence of the cross current. In other words, the controller 200 determines whether one of the first battery device 171 and the second battery device 181 is in the charging state, and the other is in the discharging state, and the controller 200 estimates that there is a possibility of the occurrence of the cross current if a positive determination is obtained and estimates that there is no possibility of the occurrence of the cross current if a negative determination is obtained.

In step S1450, the controller 200 performs the ON/OFF control of the first switch 173 and the second switch 183 on the basis of the second table illustrated in FIG. 7 and returns to the main routine (see FIG. 8).

In a case where the parallel connection check flag is determined to be OFF in step S1410 illustrated in FIG. 9, and a negative determination is obtained in step S1420, in step S1460, the controller 200 performs the ON/OFF control of the first switch 173 and the second switch 183 on the basis of the first table illustrated in FIG. 5(b) and returns to the main routine (see Fig. 8).

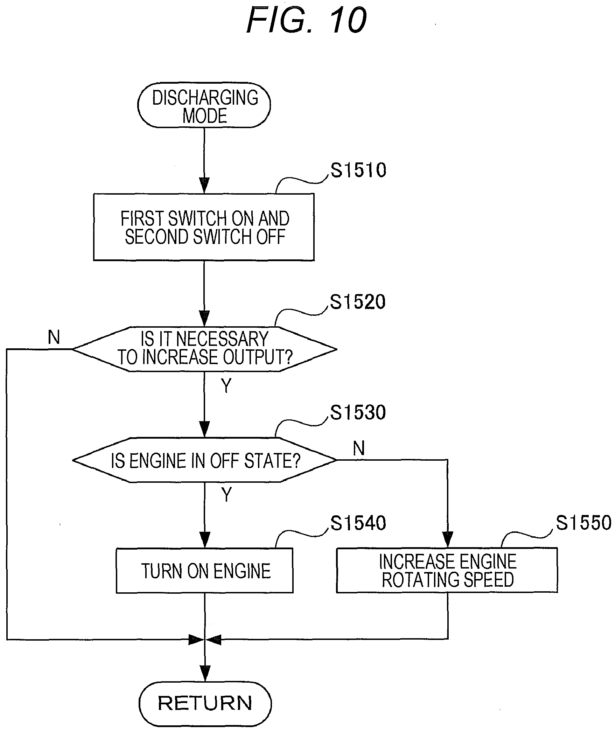

As illustrated in FIG. 8, in step S150, the controller 200 sets the discharging mode. FIG. 10 illustrates an example of processing content by the controller 200 in a case where the discharging mode is set. If the discharging mode is set, the process illustrated in the flowchart of FIG. 10 is executed.

In step S1510, the controller 200 outputs the switch ON signal to the first switch 173, outputs the switch OFF signal to the second switch 183, and the process proceeds to step S1520.

In step S1520, the controller 200 determines whether or not the output-up of the turbo regenerative generator 132 is necessary. If a positive determination is obtained in step S1520, the process proceeds to step S1530, and if a negative determination is obtained in step S1520, the process returns to the main routine (see FIG. 8).

In step S1530, the controller 200 determines whether or not the engine 11 is in the OFF state. If a positive determination is obtained in step S1530, the process proceeds to step S1540, and if a negative determination is obtained in step S1530, the process proceeds to step S1550.

In step S1540, the controller 200 outputs the control signal (the engine ON signal) for starting the engine 11 to the engine controller 300 and returns to the main routine (see FIG. 8) .

In step S1550, the controller 200 outputs the control signal for increasing the rotating speed of the engine 11 to the engine controller 300 and returns to the main routine (see FIG. 8).

According to the second embodiment, in addition to the same effects as in the first embodiment, the following effects are obtained.

(3) The switching device that performs switching of causing the first battery device 171 and the second battery device 181 to enter the connected state or in the non-connected state is installed. By causing the first battery device 171 and the second battery device 181 to enter the non-connected state through the switching device, it is possible to prevent the occurrence of the cross current between the first battery device 171 and the second battery device 181.

(4) The switching device includes the first switch 173 that performs switching of causing the first battery device 171 and the turbo regenerative generator 132 to enter the connected state or the non-connected state. Accordingly, it is possible to select whether or not the first battery device 171 is charged with the electric power generated by the turbo regenerative generator 132.

(5) The switching device includes the second switch 183 that performs switching of causing the second battery device 181 and the turbo regenerative generator 132 to enter the connected state or the non-connected state. Accordingly, it is possible to select whether or not the second battery device 181 is charged with the electric power generated by the turbo regenerative generator 132.

(6) The first switch 173 can perform switching of causing the first battery device 171 and the compressor system 12 to enter the connected state or the non-connected state. In a case where the turbo regenerative generator 132 is not performing the power generation, the first battery device 171 and the compressor system 12 enter the connected state through the first switch 173 (No in step S130 → step S1510). Accordingly, for example, the power generation PG is small (the charging power P <0) immediately after re-acceleration after deceleration or immediately after starting, the power of the first battery device 171 assists the driving of the compressor system 12 with the electric power from the first battery device 171, and thus it is possible to improve a transient response delay (a turbo lag) .

(7) In a case where the turbo regenerative generator 132 is not performing the power generation, the second battery device 181 and the turbo regenerative generator 132 enter the non-connected state through the second switch 183 (No in step S130 → step S1510) . As a result, when the turbo regeneration is not performed, the auxiliary machine 182 can be driven with the electric power from the second battery device 181.

(8) In a case where the turbo regenerative generator 132 is not performing the power generation, the first switch 173 is set to the connected state, and the second switch 183 is set to the non-connected state as described in (6) and (7). Accordingly, when the turbo regeneration is not performed, it is possible to prevent the electric power from being supplied from the first battery device 171 to the second battery device 181, and thus the efficiency can be improved as compared with the case in which the electric power is supplied from the first battery device 171 to the second battery device 181.

(9) In a case where the power generation PG of the turbo regenerative generator 132 is smaller than a predetermined value, in other words, in a case where the charging power P is equal to or larger than 0 and equal to or less than a predetermined value (the threshold value P1), the first switch 173 causes the first battery device 171 and the turbo regenerative generator 132 to enter the non-connected state, and the second switch 183 causes the second battery device 181 and the turbo regenerative generator 132 to enter the connected state. Therefore, the electric power generated by the turbo regenerative generator 132 is supplied to the compressor system 12 and the auxiliary machine electrical system 18B and not supplied to the first battery device 171. Here, since the opportunity for the state in which the charging power P is equal to or more than 0 and equal to or less than the predetermined value (the threshold value P1) is larger than other states, in a case where the electric power generated by the turbo regenerative generator 132 in the above state is stored in the first battery device 171, a period of time necessary for charging the first battery device 171 is long, and it is necessary to increase the charging capacity of the first battery device 171. According to the present embodiment, in a case where the power generation PG is smaller than the predetermined value, the capacity of the first battery device 171 can be reduced as compared with the case in which the first battery device 171 is charged.

(10) In a case where the power generation PG of the turbo regenerative generator 132 is larger than the predetermined value, in other words, in a case where the charging power P is larger than the predetermined value (the threshold value P1), the switching device causes the first battery device 171 and the turbo regenerative generator 132 to enter the connected state through the first switch 173 and causes the second battery device 181 and the turbo regenerative generator 132 to enter the connected state through the second switch 183. Since the first switch 173 is in the connected state, the energy when the high rotation (high output) operation is performed can be recovered by the first battery device 171 having the smaller charging resistance, and the gasoline mileage can be improved. Further, since the second switch 183 is in the connected state, it is possible to prevent a situation in which the electric power is unable to be absorbed after the first battery device 171 is fully charged.

-Third embodiment-

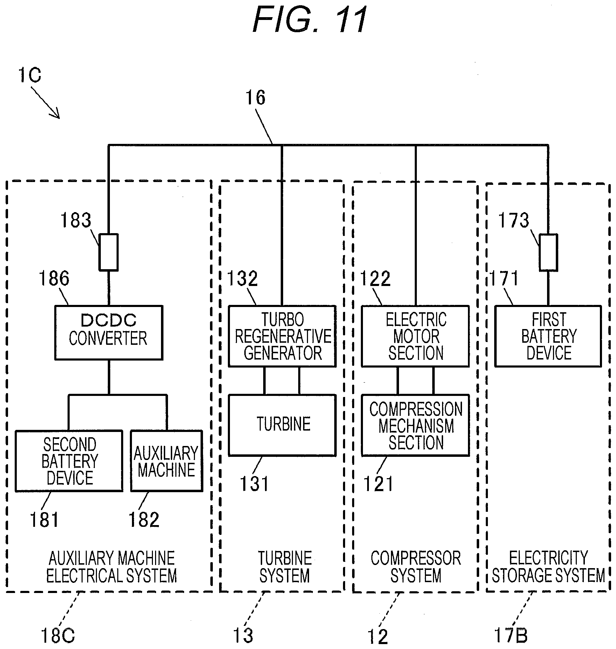

A turbo regeneration system 1C according to a third embodiment will be described with reference to FIGS. 11 to 13. In the drawings, parts which are identical or correspond to as those in the second embodiment are denoted by the same reference numerals, and the description will proceed focusing on different points. FIG. 11 is a diagram illustrating a configuration of the turbo regeneration system 1C according to the third embodiment. The third embodiment differs from the second embodiment in that a DCDC converter 186 is installed in an auxiliary machine electrical system 18C.

The auxiliary machine 182 and the second battery device 181 are connected to the power bus 16 via the DCDC converter 186 and the second switch 183. In the third embodiment, the terminal voltages of the first battery device 171 and the turbo regenerative generator 132 are set to 48 V. The terminal voltages of the first battery device 171 and the turbo regenerative generator 132 may be set to be higher than 48 V. The DCDC converter 186 is a one-way DCDC converter that steps down the electric power generated by the turbo regenerative generator 132 or the electric power stored in the first battery device 171 to 14 V.

The DCDC converter 186 may be constituted with a chopper circuit. An example of the chopper circuit is disclosed in reference document "Seiya Abe, Toshiyuki Zaitsu: Basics of switching power supply control design, Nikkei BP, Inc."

In the present embodiment, an auxiliary machine having a relatively large electric power (for example, a starter or a compressor for an electric air conditioner) among the auxiliary machines 182 may be connected to the power bus 16.

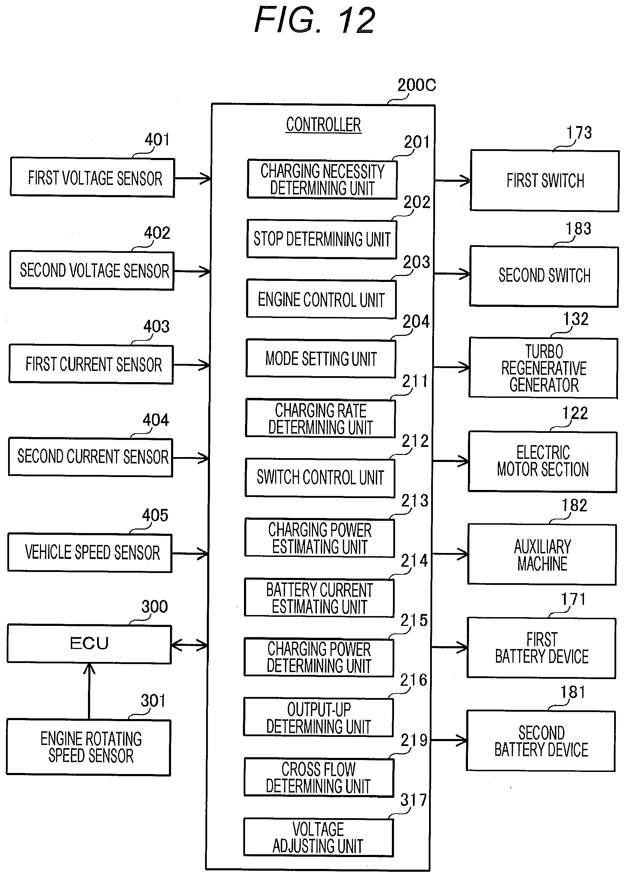

FIG. 12 is a functional block diagram of a controller 200C according to the third embodiment. In the third embodiment, the controller 200C is provided in place of the controller 200 described in the second embodiment. The controller 200C further includes a voltage adjusting unit 317 functionally.

The voltage adjusting unit 317 outputs a control signal to a regulator (not illustrated) and adjusts the voltage of the turbo regenerative generator 132 through the regulator so that the power generation is performed within a predetermined voltage range. The voltage adjusting unit 317 generates a voltage adjustment control signal in accordance with the power generation PG of the turbo regenerative generator 132. The voltage of the turbo regenerative generator 132 is changed, for example, from 32 V to 52 V, 30 V to 48 V, or 32 V to 52 V through the regulator.

The turbo regenerative generator 132 is driven in one or both modes of constant power generation and constant current generation. The voltage of the turbo regenerative generator 132 is decided in accordance with the voltage of the first battery device 171, the resistance of the first battery device 171, the electric power generated by the turbo regenerative generator 132, or the electric current within a predetermined voltage range, but the voltage is adjusted through the regulator (not illustrated).

The voltage adjusting unit 317 sets the generated voltage of the turbo regenerative generator 132 to the open circuit voltage of the first battery device 171 in a case where the charging rate determining unit 211 determines that the charging rate Cp of the first battery device 171 is equal to or larger than the upper limit value Cp2. Accordingly, it is possible to prohibit the charging of the first battery device 171 and prevent the overcharging of the first battery device 171.

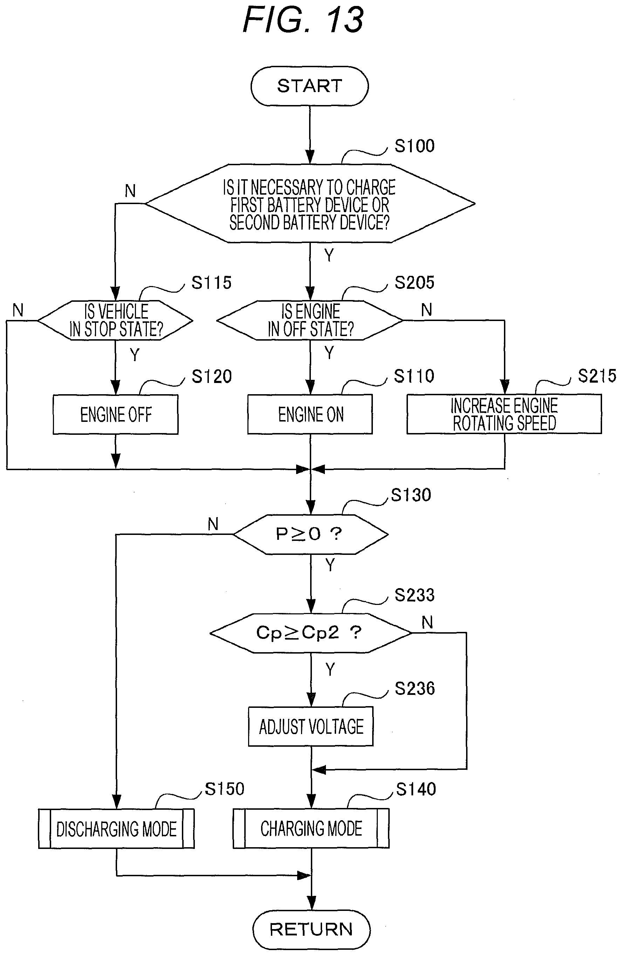

FIG. 13 is a flowchart illustrating an example of processing content by an engine rotating speed control and voltage adjustment control process program executed by the controller 200C according to the third embodiment. A process illustrated in the flowchart of FIG. 13 is started when the ignition switch (not illustrated) is turned on and repeatedly executed with a predetermined control cycle. The controller 200C monitors whether or not the ignition switch is turned off and ends the process illustrated in FIG. 13 in a case where the ignition switch is turned off. Although not illustrated, acquisition of information such as the charging rate, the terminal voltage, the engine rotating speed, the vehicle speed, or the like of the first battery device 171 is repeated with a control cycle.

In the third embodiment, the controller 200C controls the rotating speed of the engine 11 or the voltage of the turbo regenerative generator 132 in accordance with the charging state of the first battery device 171 or a power generation state of the turbo regenerative generator 132.

In the flowchart of FIG. 13, a process of step S205 is added between step S100 and step S110 in the flowchart of FIG. 8, and a process of step S215 is added between step S205 and step S130. Further, a process of step S233 and step S236 is added between step S130 and step S140.

In step S205, the controller 200C determines whether or not the engine 11 is in the OFF state. If a positive determination is obtained in step S205, the process proceeds to step S110, and if a negative determination is obtained in step S205, the process proceeds to step S215.

In step S215, the controller 200C outputs the control signal for increasing the rotating speed of the engine 11, and the process proceeds to step S130. If a positive determination is obtained in step S130, the process proceeds to step S233.

In step S233, the controller 200C determines whether or not the charging rate Cp of the first battery device 171 is equal to or larger than the upper limit value Cp2. If a positive determination is obtained in step S233, the process proceeds to step S236. If a negative determination is obtained in step S233, the process proceeds to step S140.

In step S236, the controller 200C outputs the control signal to the turbo regenerative generator 132, and adjusts the voltage of the turbo regenerative generator 132 to the open circuit voltage of the first battery device 171, and the process proceeds to step S140.

Processing content in the charging mode and the discharging mode are similar to in the process described in the second embodiment, but the following points are different from the second embodiment. The switch control unit 212 outputs the switch ON signal to each of the first switch 173 and the second switch 183 in a case where it is determined that it is not necessary to charge the first battery device 171, and it is necessary to charge the second battery device 181.

According to the third embodiment, in addition to the same effects as in the second embodiment, the following effects are obtained.

(11) The voltage of the electricity storage system 17 is higher than the voltage of the auxiliary machine electrical system 18C. The auxiliary machine electrical system 18C includes the DCDC converter 186 that converts the high voltage power from the electricity storage system 17 into low voltage power and supplies the low voltage power to the auxiliary machine 182. Since it is possible to reduce the electric current flowing to the power bus 16 and reduce the loss, it is possible to reduce a diameter of a power line constituting the power bus 16.

-Fourth embodiment-

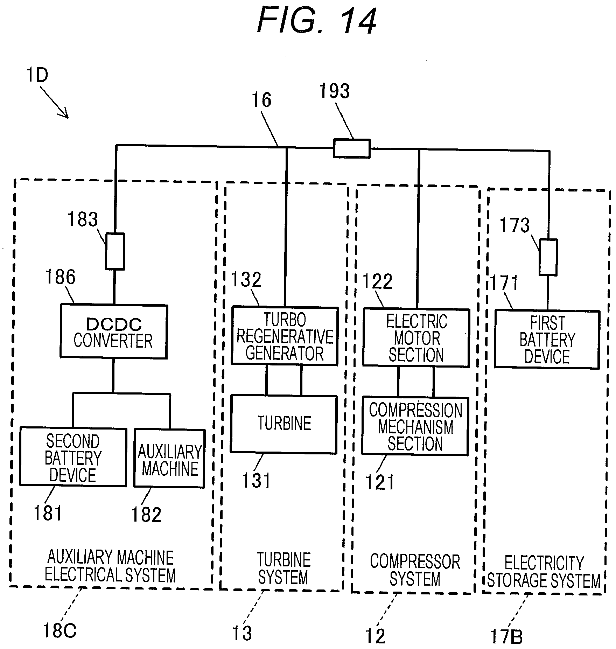

A turbo regeneration system 1D according to a fourth embodiment will be described with reference to FIG. 14. In the drawings, parts which are identical or correspond to as those in the third embodiment are denoted by the same reference numerals, and the description will proceed focusing on different points. FIG. 14 is a diagram illustrating a configuration of the turbo regeneration system 1D according to the fourth embodiment. The fourth embodiment differs from the third embodiment in that a third switch 193 is installed in the power bus 16 connecting the turbine system 13 and the compressor system 12.

The third switch 193 can perform switching of causing the turbine system 13 and the compressor system 12 to enter the connected state or the non-connected state. The ON/OFF of the third switch 193, that is, the connection/disconnection is controlled by the controller 200C (see FIG. 12).

If the discharging mode is set, the switch control unit 212 illustrated in FIG. 12 outputs the switch ON signal to the first switch 173, outputs the switch OFF signal to the second switch 183, and outputs the switch ON signal to the third switch 193.

If the charging mode is set, in a case where the charging power P is less than the threshold value P1, the switch control unit 212 outputs the switch ON signal to each of the first switch 173 and the second switch 183 and outputs the switch OFF signal to the third switch 193. In a case where it is determined that it is not necessary to charge the first battery device 171, and it is necessary to charge the second battery device 181, the switch control unit 212 outputs the switch OFF signal to the first switch 173, outputs the switch ON signal to the second switch 183, and outputs the switch OFF signal to the third switch 193. Accordingly, it is possible to prevent the electric power generated by the turbo regenerative generator 132 from being supplied to the compressor system 12. As a result, the power supply amount to the second battery device 181 can be increased.

In a case where it is determined that it is necessary to charge the first battery device 171, and it is not necessary to charge the second battery device 181, the switch control unit 212 outputs the switch ON signal to the first switch 173, outputs the switch OFF signal to the second switch 183, and outputs the switch ON signal to the third switch 193. Accordingly, similarly to the second and third embodiments, it is possible to supply the electric power generated by the turbo regenerative generator 132 to the electric motor section 122 of the compressor system 12 and drive the electric motor section 122, and it is possible to supply the surplus power to the first battery device 171 and charge the first battery device 171.

According to the fourth embodiment like this, in addition to the same effects as in the third embodiment, the following effect can be obtained.

(12) The third switch 193 that performs switching of causing the turbo regenerative generator 132 and the electric motor section 122 of the compressor system 12 to enter the connected state or the non-connected state is provided. Thus, in a case where it is necessary to urgently charge the second battery device 181, the third switch 193 is switched to the non-connected state, and thus it is possible to prevent the electric power generated by the turbo regenerative generator 132 from being supplied to the compressor system 12. As a result, the power supply amount to the second battery device 181 can be increased.

-Fifth embodiment-

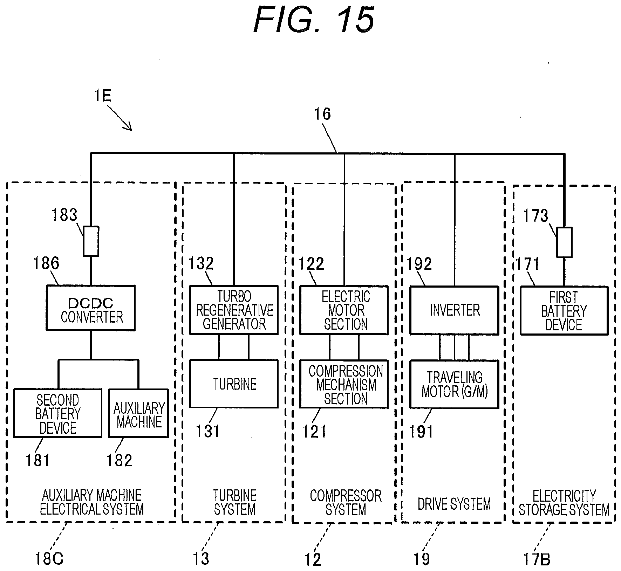

A turbo regeneration system 1E according to a fifth embodiment will be described with reference to FIGS. 15 to 17. In the drawings, parts which are identical or correspond to as those in the third embodiment are denoted by the same reference numerals, and the description will proceed focusing on different points. FIG. 15 is a diagram illustrating the configuration of the turbo regeneration system 1E according to the fifth embodiment. The fifth embodiment differs from the third embodiment in that a power bus 16 is connected with a traveling drive system (hereinafter referred to simply as a drive system 19) for driving the vehicle 10. The drive system 19 is connected in parallel with the turbine system 13, the compressor system 12, the electricity storage system 17, and the auxiliary machine electrical system 18.

The drive system 19 includes a traveling motor 191 and an inverter 192. The traveling motor 191 is a generator motor (G/M) installed in a propeller shaft (a drive shaft) constituting a traveling device. The traveling motor 191 includes a cylindrical rotor and a cylindrical stator around which an armature winding is wound, and the propeller shaft is integrated with the rotor such that the propeller shaft is press-fitted into a hollow portion of the rotor.

The inverter 192 is a power conversion device that converts DC power into AC power or AC power into DC power. The traveling motor 191 is driven by three-phase AC power converted by the inverter 192 and generates rotational torque. The rotational torque generated by the traveling motor 191 is transmitted to the wheels (driving wheels) via the propeller shaft, a differential device, an axle, or the like.

On the other hand, when a regenerative braking operation (that is, a deceleration regeneration) is performed, the traveling motor 191 is rotated in accordance with the rotational torque transmitted from the wheels and generates the three-phase AC power. The three-phase AC power generated by the traveling motor 191 is converted into DC power through the inverter 192 and supplied to the first battery device 171, so that the first battery device 171 is charged. The three-phase AC power generated by the traveling motor 191 is converted into DC power through the inverter 192 and supplied to the second battery device 181 via the DCDC converter 186, so that the second battery device 181 is charged. The inverter 192 may be equipped with a voltage converter.

In the present embodiment, the electric power obtained by the turbo regeneration by the turbine system 13 and the power obtained by the deceleration regeneration by the drive system 19 are supplied to the first battery device 171 and the second battery device 181 as described below.

In a state in which the vehicle 10 is accelerating, the turbo regeneration by the turbine system 13 is performed, but the deceleration regeneration by the drive system 19 is not performed. On the other hand, in a state in which the vehicle 10 is decelerating, fuel is not supplied to the engine 11, the turbo regeneration by the turbine system 13 is not performed, but the deceleration regeneration by the drive system 19 is performed.

In other words, the turbo regenerative generator 132 and the traveling motor 191 generate electric power at the same time. However, in the present embodiment, a power generation amount is larger than that in the third embodiment. Therefore, in the present embodiment, power time sharing is performed through energy management.

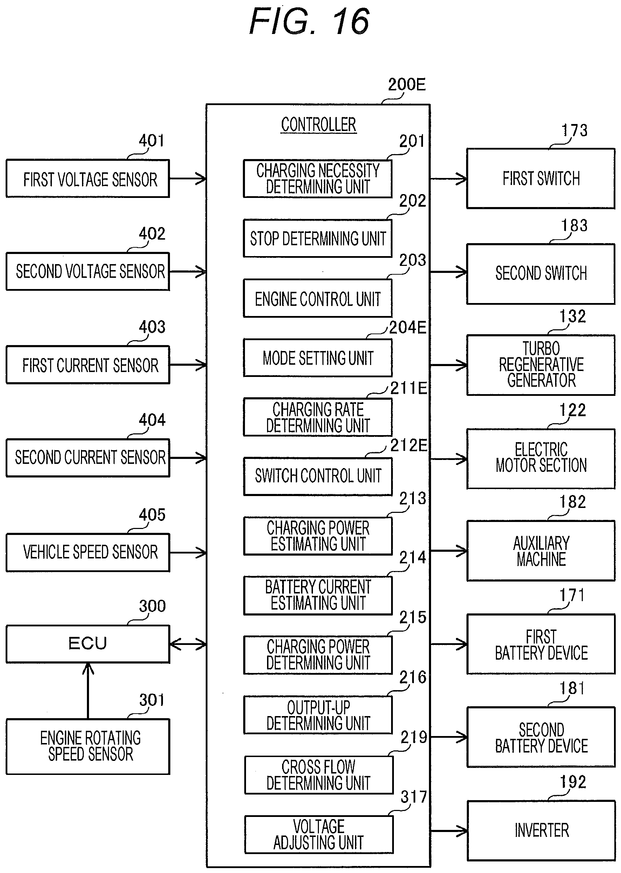

FIG. 16 is a functional block diagram of a controller 200E according to the fifth embodiment. The controller 200E causes the first battery device 171 to be charged by the turbo regeneration even at the time of traveling and controls each part so that the opportunity for driving the engine 11 is reduced at the time of starting and accelerating. In the fifth embodiment, the controller 200E is provided in place of the controller 200C described in the third embodiment. In addition to the functions of the mode setting unit 204, the charging rate determining unit 211, and the switch control unit 212 described in the second embodiment (see FIG. 4), the controller 200E further includes a mode setting unit 204E, a charging rate determining unit 211E, and a switch control unit 212E. An inverter 192 is connected to the controller 200E, and a switching semiconductor element constituting the inverter 192 is controlled in accordance with a control signal from the controller 200E.

The mode setting unit 204E determines whether or not the charging power P is equal to or larger than 0, and in a case where the charging power P is equal to or larger than 0 ($P \geq 0$), the mode setting unit 204E determines that the turbo regenerative generator 132 is performing the power generation, that is, the traveling motor 191 is performing the power generation and sets a turbo regeneration charging mode. The turbo regeneration charging mode corresponds to the charging mode described in the second embodiment (see FIG. 9). In the present embodiment, in the turbo regeneration charging mode, the charging of the first battery device 171 is performed until the charging rate Cp of the first battery device 171 becomes a turbo regeneration target charging rate Cp3 calculated by Formula (9).

In a case where the charging power P is less than 0 (P <0), the mode setting unit 204E determines whether or not the deceleration regeneration is being performed on the basis of information from the LAN of the vehicle 10. Alternatively, the mode setting unit 204E determines whether or not the traveling motor 191 is performing the power generation, determines that the deceleration regeneration is being performed in a case where the power generation is being performed, and determines that the deceleration regeneration is not being performed in a case where the power generation is not being performed. The mode setting unit 204E sets a deceleration regeneration charging mode if the deceleration regeneration is being performed.

If the deceleration regeneration charging mode is set, the switch control unit 212E outputs the switch ON signal to the first switch 173. Accordingly, the electric power generated by the traveling motor 191 is supplied to the first battery device 171, and the first battery device 171 is charged. The switch control unit 212E may output the switch ON signal to the second switch 183 in a case where the deceleration regeneration charging mode is set. In this case, the electric power generated by the traveling motor 191 is also supplied to the second battery device 181, and the second battery device 181 is charged.

The mode setting unit 204E sets an idling stop discharging mode in a case where it is determined that the deceleration regeneration is not being performed, and the stop determining unit 202 determines that the vehicle 10 is in the stop state. If the idling stop discharging mode is set, the switch control unit 212E outputs the switch ON signal to the first switch 173 and outputs the switch OFF signal to the second switch 183.

In a case where it is determined that the vehicle 10 is not in the stop state, the mode setting unit 204E sets either an engine driving mode or a powering discharging mode in accordance with the determination result obtained by the charging necessity determining unit 201. If the charging necessity determining unit 201 determines that it is necessary to charge the first battery device 171, the mode setting unit 204E sets the engine driving mode. If the engine driving mode is set, the engine control unit 203E outputs the engine ON signal to the engine controller 300.

If the charging necessity determining unit 201 determines that it is not necessary to charge the first battery device 171, the mode setting unit 204E sets the powering discharging mode. In other words, in a case where the charging rate Cp and the dischargeable power Dp of the first battery device 171 are equal to or larger than the lower limit value, the traveling system is driven using the traveling motor 191 as the driving source, and in a case where any one of the charging rate Cp and dischargeable power Dp of the first battery device 171 is less than the lower limit value, the traveling system is driven using the engine 11 as the driving source.

If the powering discharging mode is set, the switch control unit 212E outputs the switch ON signal to the first switch 173. Accordingly, the traveling motor 191 is driven with the electric power of the first battery device 171, and the vehicle travels. In a case where the powering discharging mode is set, the switch control unit 212E outputs the switch OFF signal to the second switch 183 if it is determined that it is not necessary to charge the second battery device 181 and outputs the switch ON signal to the second switch 183 if it is determined that it is necessary to charge the second battery device 181. Accordingly, in a case where the second battery device 181 is charged urgently, the electric power from the first battery device 171 can be supplied to the second battery device 181.

In a case where the turbo regeneration charging mode is set, the charging rate determining unit 211E determines whether or not the charging rate Cp of the first battery device 171 is equal to or larger than the turbo regeneration target charging rate Cp3. The turbo regeneration target charging rate Cp3 corresponds to a charging rate in which the energy which can be charged with one deceleration regeneration is considered. The turbo regeneration target charging rate Cp3 is indicated by Formula (9).

$$Cp3 = Cp2 - Er/(Va \times Qmax) \quad \dots \quad (9)$$

Here, Qmax is a capacity [Ah] of the first battery device 171 and stored in the storage device in advance.

Va is an average voltage [V] of the first battery device 171 at the time of regeneration. The average voltage Va can be obtained by various methods. As a method of deciding the average voltage Va simply, a voltage Ef at the upper limit value Cp2 of the charging rate Cp may be employed.

In a case where the first battery device 171 has a configuration in which 12 lithium ion batteries are connected in series, and the voltage Ef at the upper limit value Cp2 of the charging rate Cp (for example, 0.7) is 3.8 V per lithium ion battery, the average voltage is 45.6 V.

Er is regeneratable energy and indicated by the following Formula (10).

$$Er = Ek \times \eta m \times \eta i \times \eta r \; [Wh] \; \ldots \; (10)$$

Here, $\eta m$ indicates motor efficiency of the traveling motor 191, is a value (for example, 0.9 to 0.95) decided in accordance with a specification of the traveling motor 191, and stored in the storage device in advance. $\eta i$ is indicates inverter efficiency of the inverter 192, is a value decided in accordance with a parameter of the inverter 192, and stored in the storage device in advance.

$\eta r$ indicates actual regeneration efficiency, is a value indicating a ratio to energy consumed by a mechanical friction brake so that it is used in combination with the mechanical friction brake when the hybrid vehicle decelerates. The actual regeneration efficiency $\eta r$ is a value decided in accordance with a design of the vehicle 10, and for example, a value of 0.5 is employed and stored in the storage device in advance. Ek indicates kinetic energy of the vehicle 10 ($1/2 \times m \times v \times v$), is a value decided in accordance with the speed of the vehicle 10 (the vehicle speed v) and a vehicle body weight m. The vehicle body weight m is stored in the storage device in advance.

The regeneratable energy Er is calculated by the controller 200E. An example of a regeneratable energy calculation is as follows. For example, if it is assumed that the motor efficiency $\eta m$ is 0.9, the inverter efficiency $\eta i$ is 0.9, the actual regeneration efficiency $\eta r$ is 0.5, the body weight is 1000 kg, and the vehicle speed is 20 m/s, the regeneratable energy Er is 22.5 [Wh] ($= 0.5 \times 1000 \times 20 \times 20 \times 0.9 \times 0.9 \times 0.5/3600$) in accordance with Formula (10) if the rolling resistance and aerodynamic resistance are ignored.

In a case where the capacity Qmax of the first battery device 171 is 5 [Ah], the turbo regeneration target charging rate Cp3 is 0.602 (= 0.7 - 0.098) in accordance with Formula (9). In this case, the charging of the first battery device 171 according to the turbo regeneration is continued until the charging rate Cp of the first battery device 171 becomes the turbo regeneration target charging rate Cp3 (= 60.2 [%]).

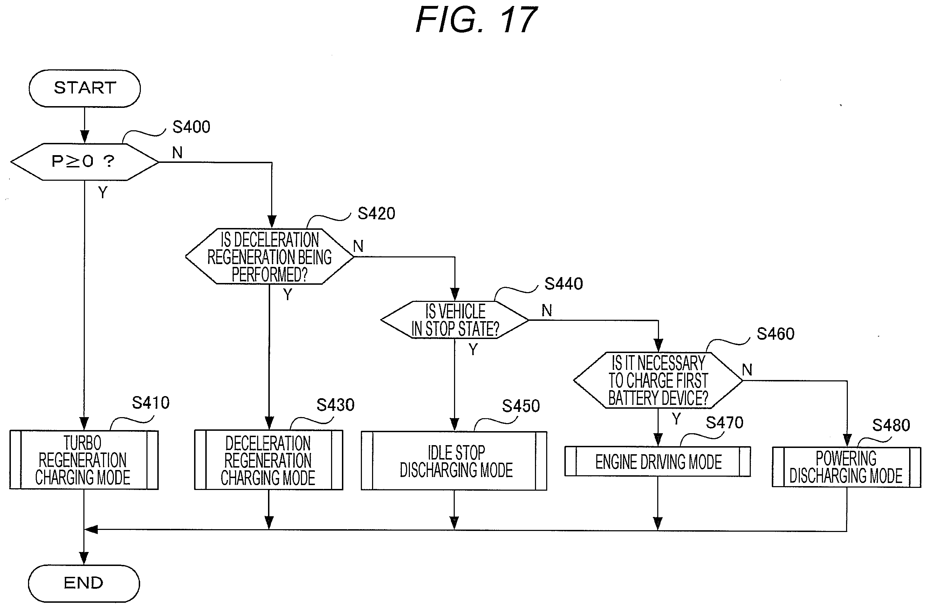

FIG. 17 is a flowchart illustrating an example of processing content by a coexistence control program of turbo regeneration and deceleration regeneration executed by the controller 200E according to the fifth embodiment. A process illustrated in the flowchart of FIG. 17 is started when the ignition switch (not illustrated) is turned on and repeatedly executed with a predetermined control cycle. Further, the controller 200E monitors whether or not the ignition switch is turned off and ends the process illustrated in FIG. 17 in a case where the ignition switch is turned off. Although not illustrated, acquisition of information such as the charging rate, the terminal voltage, the engine rotating speed, the vehicle speed, or the like of the first battery device 171 and the second battery device 181 is repeated with a control cycle.

In step S400, the controller 200E determines whether or not the charging power P is 0 or more. In a case where a positive determination is obtained in step S400, the process proceeds to step S410, the turbo regeneration charging mode is set, and if a negative determination is obtained in step S400, the process proceeds to step S420.

In step 420, the controller 200E determines whether or not the deceleration regeneration is being performed. If a positive determination is obtained in step S420, the process proceeds to step S430, the regenerative charging mode is set, and if a negative determination is obtained in step S420, the process proceeds to step S440.

In step S440, the controller 200E determines whether or not the vehicle 10 is in the stop state. If a positive determination is obtained in step S440, the process proceeds to step S450, the idling stop discharging mode is set, and if a negative determination is obtained in step S440, the process proceeds to step S460.

In step S460, the controller 200E determines whether or not it is necessary to charge the first battery device 171. If a positive determination is obtained in step S460, the process proceeds to step S470, the engine driving mode is set, and if a negative determination is obtained in step S460, the process proceeds to step S480, and the powering discharging mode is set.

According to the fifth embodiment, in addition to the same effects as in the third embodiment, the following effects are obtained.

(13) The drive system 19 connected in parallel to the turbine system 13 is provided. At the time of deceleration regeneration, the first battery device 171 is charged with the electric energy generated by the traveling motor 191. The energy charged by the deceleration regeneration is used for the idling stop at the time of stop and motor assist at the time of starting. However, due to consumption of energy at the time of idling stop, a motor loss at the time of charging, a battery loss, or the like, there is a possibility that the vehicle is unable to reach the constant speed after starting only through the energy charged by the deceleration regeneration.

The turbo regeneration system 1E according to the present embodiment is configured to be able to charge the first battery device 171 until the turbo regeneration target charging rate Cp3 is reached when the vehicle 10 is operating at a constant engine rotating speed and torque of a good gasoline mileage. Therefore, it is possible to reach up to a certain speed without using the power of the engine 11 after starting. At the time of starting and accelerating, the consumption of the gasoline mileage can be suppressed, and thus the gasoline mileage is improved. Further, the turbo regeneration target charging rate Cp3 is a value smaller than the upper limit value Cp2. In other words, since the charging rate Cp of the first battery device 171 during the turbo regeneration by the turbine system 13 can be reduced to be lower than or equal to the upper limit value Cp2, when the deceleration regeneration is performed after the turbo regeneration ends, it is possible to secure a free capacity which can sufficiently absorb the electric power generated by the traveling motor 191 through the first battery device 171.

-Sixth embodiment-

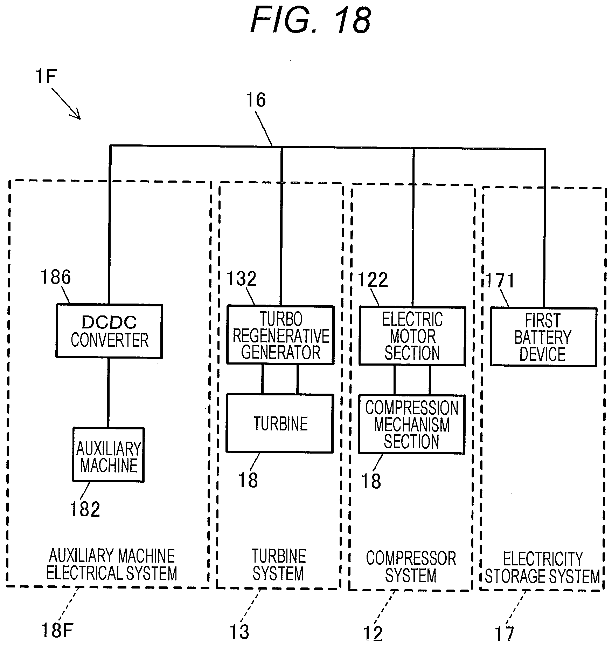

A turbo regeneration system 1F according to a sixth embodiment will be described with reference to FIGS. 18 to 20. In the drawings, parts which are identical or correspond to as those in the second embodiment are denoted by the same reference numerals, and the description will proceed focusing on different points. FIG. 18 is a diagram illustrating a configuration of the turbo regeneration system 1F according to the sixth embodiment. The sixth embodiment differs from the second embodiment in that a DCDC converter 186 is installed in an auxiliary machine electrical system 18F, and the second battery device 181, the first switch 173, and the second switch 183 are not installed. The capacity of the first battery device 171 according to the sixth embodiment corresponds to the sum of the capacity of the first battery device 171 and the capacity of the second battery device 181 according to the second embodiment.

The auxiliary machine 182 is connected to the power bus 16 via the DCDC converter 186. In the sixth embodiment, the terminal voltage of the first battery device 171 or the turbo regenerative generator 132 is set to 48 V. The DCDC converter 186 is a one-way DCDC converter that steps down the electric power generated by the turbo regenerative generator 132 or the electric power stored in the first battery device 171 to 14 V, similarly to the third embodiment.

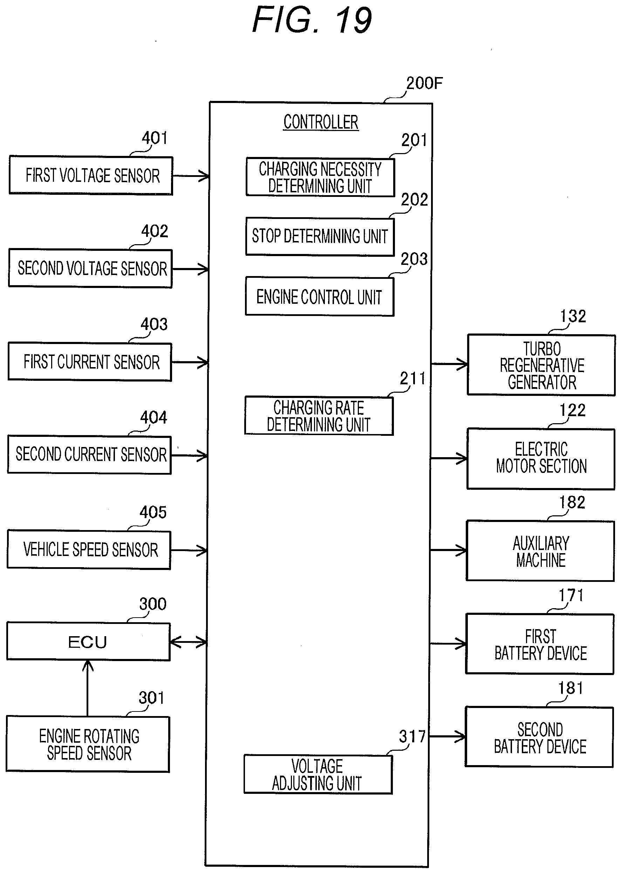

FIG. 19 is a functional block diagram of a controller 200F according to the sixth embodiment. In the sixth embodiment, the controller 200F is provided in place of the controller 200 described in the second embodiment. The controller 200F includes a voltage adjusting unit 317 functionally instead of the mode setting unit 204, the switch control unit 212, the charging power estimating unit 213, the battery current estimating unit 214, the charging power determining unit 215, the output-up determining unit 216, and the cross current determining unit 219 described in the second embodiment (see FIG. 4).

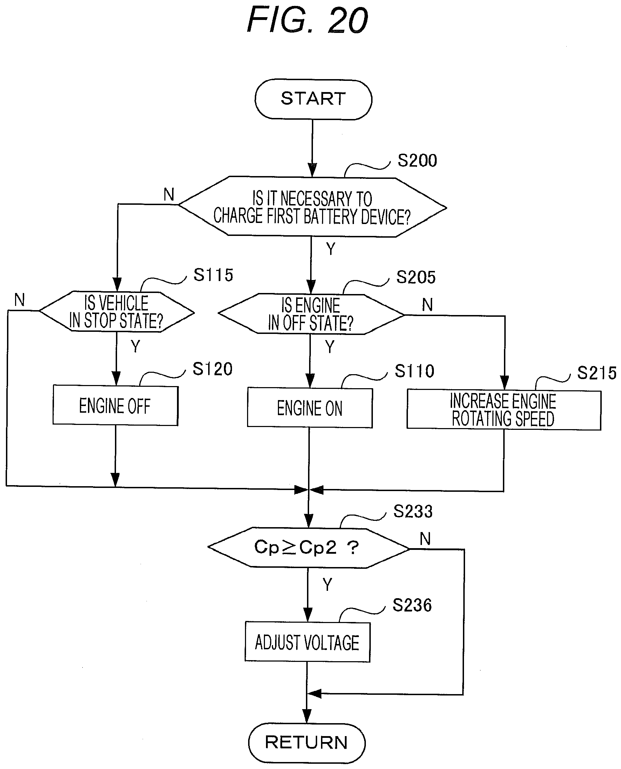

FIG. 20 is a flowchart illustrating an example of processing content by an engine rotating speed control and voltage adjustment control process program executed by controller 200F in accordance with the sixth embodiment. The process illustrated in the flowchart of FIG. 20 is started when the ignition switch (not illustrated) is turned on and repeatedly executed with a predetermined control cycle. The controller 200F monitors whether or not the ignition switch is turned off and ends the process illustrated in FIG. 20 in a case where the ignition switch is turned off. Although not illustrated, acquisition of information such as the charging rate, the terminal voltage, the engine rotating speed, the vehicle speed, or the like of the first battery device 171 is repeated with a control cycle.

In the sixth embodiment, the controller 200F controls the rotating speed of the engine 11 or the voltage of the turbo regenerative generator 132 in accordance with the charging state of the first battery device 171 and the power generation state of the turbo regenerative generator 132.

In the flowchart of FIG. 20, a process of step S200 is added instead of step S100 in the flowchart of FIG. 8, and a process of steps S233 and S236 is added instead of steps S130, S140, and S150. Further, in the flowchart of FIG. 20, a process of step S205 is added between step S200 and step S110, and a process of step S215 is added between step S205 and step S233. Since the process of step S205, step 215, and step S233 is the same as the process described in the third embodiment, description thereof will be omitted.

In step S200, the controller 200F determines whether or not it is necessary to charge the first battery device 171. If a positive determination is obtained in step S200, the process proceeds to step S205, and if a negative determination is obtained in step S200, the process proceeds to step S115.

If the engine ON process of step S110 or the engine OFF process of step S120 is completed, if a negative determination is obtained in the stop state determination process of step S115, or if the engine rotating speed increasing process of step S215 is completed, the process proceeds to step S233.

In step S236, the controller 200F outputs a control signal to the turbo regenerative generator 132, adjusts the voltage of the turbo regenerative generator 132 to the open circuit voltage of the first battery device 171, and ends the process illustrated in FIG. 20.

In accordance with the sixth embodiment like this, in addition to the same effect as (1) described in the first embodiment, the following effects can be obtained.

(14) Since the capacity of the first battery device 171 having a high energy density is increased, and the second battery device 181 described in the first and second embodiments is omitted, the degree of freedom of layout and the size reduction can be improved.

The following modifications can be made within the scope of the present invention, and one or more of modified examples can be combined with the above-described embodiments.

(Modified example 1)

Instead of the (condition 2A) and the (condition 2B) in the second embodiment, the following (condition 2X) may be employed. The controller 200 determines that it is necessary to charge the second battery device 181 in a case where the (condition 2X) is satisfied and determines that it is not necessary to charge the second battery device 181 if the (condition 2X) is not satisfied.
(Condition 2X) voltage of second battery device 181 ≤ specified value Cx
The specified value Cx is a numerical value (for example, about 12.4 V) which is experimentally found and indicates that there is remaining electric power for activating an auxiliary machine having the highest necessary electric power (for example, starter) among a plurality of auxiliary machines 182 and stored in the storage device in advance.

(Modified example 2)

In the second embodiment, if a positive determination is obtained in step S100 in the next control cycle after the engine OFF process (step S120) illustrated in FIG. 8, the engine ON process (step S110) is executed, and if a negative determination is obtained in step S100 in the next control cycle, the engine OFF process is executed again. In other words, the engine ON process and the engine OFF process are likely to be repeated. In this regard, an engine ON flag may be set to ON in the engine ON process (step S110), and a process of proceeding to step S130 without performing the engine OFF process (step S120) in a case where the engine ON flag is ON may be added between step S115 and step S120. The engine ON flag is set to OFF if the charging rate of the battery is equal to or larger than a predetermined constant value (for example, the charging rate of the first battery device 171 is 50%, and the charging rate of the second battery device 181 is 83%). In other words, the idling stop is not performed for a predetermined period of time after the engine is turned on.

(Modified example 3)

In the second embodiment, if the charging power P is less than 0 in the mode determination process (step S130) illustrated in FIG. 8, the discharging mode is set, and if a positive determination is obtained in the output-up necessity determination process (step S1520) illustrated in FIG. 10, and a positive determination is obtained in step S130 in the next control cycle, the charging mode is set. Thereafter, if a negative determination is obtained in step S130 in the next control cycle, the discharging mode is set again. In other words, the charging mode and the discharging modes may be alternately set in a short period of time. In this regard, if a positive determination is obtained in the output-up necessity determination process (step S1520) illustrated in FIG. 10, an output-up flag may be set to ON, and a process of returning to step S100 without setting the discharging mode in a case where the output-up flag is ON may be added between steps S130 and S150. The output-up flag is set to OFF if the charging rate of the battery is equal to or larger than a predetermined constant value (for example, the charging rate of the first battery device 171 is 50%, and the charging rate of the second battery device 181 is 82%). In other words, the output of the turbo regeneration system 1B is kept for a predetermined period of time.

(Modified example 4)

In the second embodiment, in a case where the discharging mode illustrated in FIG. 10 is set, the output-up determining unit 216 may determine that the output-up is unnecessary in a case where the charging rate Cp of the first battery device 171 is equal to or larger than the upper limit value Cp2, and it is necessary to charge the second battery device 181. In this case, the controller 200B outputs the switch ON signal to each of the first switch 173 and the second switch 183.

(Modified example 5)

In the second embodiment, the example in which the first switch 173 and the second switch 183 are installed has been described, but the present invention is not limited thereto. Either the first switch 173 or the second switch 183 may be omitted. In a case where at least one of the first switch 173 and the second switch 183 is installed, when the cross current determining unit 219 estimates that there is a possibility of the occurrence of the cross current, the first battery device 171 and the second battery device 181 are caused to enter the non-connected state through the switch. Accordingly, the occurrence of the cross current can be prevented.

(Modified example 6)

In the embodiments, the first battery device 171 is equipped with a lithium ion battery, and the second battery device 181 is equipped with a lead battery, but the present invention is not limited thereto. The present invention is not limited to an electrical storage device configured with a lithium ion battery or a lead battery, but an electrical storage device may be configured with a capacitor or the like. The first battery device 171 may be configured by combining one or more of a lead battery, a nickel zinc battery, a nickel hydrogen battery, a lithium ion battery, a lithium ion capacitor, and an electric double layer capacitor. The second battery device 181 may be configured by combining one or more of a lead battery, a nickel zinc battery, a nickel hydrogen battery, and a lithium ion battery. It is preferable that at least the first battery device 171 is selected to have the charging resistance smaller than that of the second battery device 181.

(Modified example 7)

In the third embodiment (see FIG. 11), the fourth embodiment (see FIG. 14), and the fifth embodiment (see FIG. 15), the example in which the second switch 183 is installed has been described, but the present invention is not limited thereto. In a case where the DCDC converter 186 has an ON/OFF switching function, the second switch 183 can be omitted by performing control corresponding to the ON/OFF switching control of the second switch 183 through the DCDC converter 186.

(Modified example 8)

In the third and fourth embodiments, the example in which the DCDC converter 186 is a one-way DCDC converter has been described, but the present invention is not limited thereto. The DCDC converter 186 may be a bi-directional chopper type DCDC converter. For example, a chopper circuit disclosed in reference document "Atsuo Kawamura: trial production and performance evaluation test of Eco-future electric vehicle, Denso Technical Review, 2011" can be employed as the DCDC converter 186

(Modified example 8-1)

In the third embodiment, in a case where a bi-directional DCDC converter is employed, the electric power generated by the turbo regenerative generator 132 is supplied to the second battery device 181 via the DCDC converter 186, and thus it is possible to not only charge the second battery device 181 but also supply the energy stored in the second battery device 181 to a high voltage system via the DCDC converter 186. According to such a modified example, in a case where at least one of a case in which the charging rate of the first battery device 171 is equal to or less than a predetermined value and a case in which the voltage of the first battery device 171 is equal to or less than a predetermined value is satisfied, the second battery device 181 can be used as a backup. In other words, it is possible to perform supercharging by supplying the electric power from the second battery device 181 to the electric motor section 122 of the compressor system 12.

(Modified example 8-2)

In the fourth embodiment, in a case where the bi-directional DCDC converter is employed, it is preferable to perform the ON/OFF control of the first switch 173, the second switch 183, and the third switch 193 by the switch control unit 212 as follows. In a case where it is determined that it is necessary to charge either one of the first battery device 171 and the second battery device 181, and it is not necessary to charge the other battery, the switch control unit 212 outputs the switch ON signal to each of the first switch 173, the second switch 183, and the third switch 193. In a case where the charging rate of the first battery device 171 is extremely small, or in a case where the controller 200C determines that there is a failure in the first battery device 171, the switch control unit 212 outputs the switch OFF signal to the first switch 173, and outputs the switch ON signal to each of the second switch 183 and the third switch 193. Accordingly, the second battery device 181 can be used as an emergency power source on occasions of emergency.

(Modified example 9)

In the third embodiment, in the discharging mode, instead of turning off the second switch 183, the voltage of the DCDC converter 186 may be caused to be identical to the open circuit voltage of the second battery device 181 so that the charging of the second battery device 181 is suppressed.

(Modified example 10)

In the fifth embodiment, the example in which the capacity of the first battery device 171 is caused to be equal to the capacity in the third embodiment, and the power time sharing is performed has been performed, but the present invention is not limited thereto. For example, instead of performing the power time sharing, the capacity of the first battery device 171 may be increased.

(Modified example 11)

In the fifth embodiment, in a case where the engine driving mode is set, the controller 200E outputs the engine ON signal to the engine controller 300. However, in the case of a vehicle driven by using the engine 11 and the traveling motor 191 together, when the engine driving mode is set, the controller 200E outputs a control signal for increasing the output of the engine 11 to the engine controller 300 and outputs a control signal for stopping the traveling motor 191 to the inverter 192.

(Modified example 12)

In the fifth embodiment, the example in which the controller 200E calculates the turbo regeneration target charging rate Cp3 has been described, but the present invention is not limited thereto. For example, Cp3 may be simply set to 50 [%] which is a constant value and stored in the storage device . The average voltage Va may be an average value of a current battery voltage and Ef. The average voltage Va may be obtained from a relation between the charging rate Cp and the open circuit voltage.

(Modified example 13)

In the above-described embodiments, the example in which the alternator (the generator dedicated to the auxiliary machine) which is directly connected to the engine 11 and supplies the electric power to the auxiliary machine 182 is omitted has been described, but the present invention is not limited thereto. An alternator may be installed. In this case, since the power generation output of the alternator can be reduced, it is possible to reduce the load caused by the alternator and improve the gasoline mileage.

(Modified example 14)

In the above-described embodiments, the example in which the voltage of the auxiliary machine 182 is 14 V has been described, but the present invention is not limited thereto. In a case where the present invention is applied to a track or the like, the voltage of the auxiliary machine 182 may be 28 V. In this case, the voltage of the turbo regenerative generator 132 is limited to 28 V through a voltage regulator (not illustrated).

(Modified example 15)

In the above-described embodiments, the example in which the turbine 131 and the compression mechanism section 121 are not mechanically connected has been described, but the present invention is not limited thereto. The turbine 131 and the compression mechanism section 121 may be mechanically connected.

(Modified example 16)

In the above-mentioned embodiments, the example in which the turbo regeneration system is applied to the vehicle has been described, but the present invention is not limited thereto. For example, the turbo regeneration system can be applied to ships or locomotives.

Various embodiments and modified examples have been described above, but the present invention is not limited to content thereof. Other embodiments which are considered within the scope of the technical spirit of the present invention are also included within the scope of the present invention.

Reference Signs List

1A    to 1F turbo regeneration system

| 10 | vehicle |
| 11 | engine |
| 12 | compressor system |
| 13 | turbine system |
| 14 | intake pipe |
| 15 | exhaust pipe |
| 16 | power bus |
| 17 | electricity storage system |
| 18 | auxiliary machine electrical system |
| 19 | drive system |
| 121 | compression mechanism section |
| 122 | electric motor section |
| 131 | turbine |
| 132 | turbo regenerative generator |
| 171 | first battery device |
| 173 | first switch |
| 181 | second battery device |
| 182 | auxiliary machine |
| 183 | second switch |
| 186 | DCDC converter |
| 191 | traveling motor |
| 192 | inverter |
| 193 | third switch |
| 200 | controller |
| 201 | charging necessity determining unit |
| 202 | stop determining unit |
| 203 | engine control unit |
| 204 | mode setting unit |
| 211 | charging rate determining unit |
| 212 | switch control unit |
| 213 | charging power estimating unit |
| 214 | battery current estimating unit |
| 215 | charging power determining unit |
| 216 | output-up determining unit |
| 219 | cross current determining unit |
| 300 | engine controller |
| 301 | engine rotating speed sensor |
| 317 | voltage adjusting unit |
| 401 | first voltage sensor |
| 402 | second voltage sensor |
| 403 | first current sensor |
| 404 | second current sensor |
| 405 | vehicle speed sensor |

**Claims**

1. A turbo regeneration system, comprising:

   a turbine system including a turbine that rotates in accordance with an exhaust air of an engine and a turbo regenerative generator that is driven by the turbine and generates electric power;
   an electricity storage system including a first electrical storage device that is charged with the electric power generated by the turbine system;
   a compressor system including an electric motor section that is driven by the electric power generated by the turbine system and a compression mechanism section that is rotated by the electric motor section and compresses an intake air to the engine; and
   an auxiliary machine electrical system including an auxiliary machine,
   wherein the turbine system, the compressor system, the electricity storage system, and the auxiliary machine electrical system are electrically connected in parallel.

2. The turbo regeneration system according to claim 1, wherein
   the auxiliary machine electrical system further comprises a second electrical storage device that is electrically connected in parallel with the auxiliary machine, and
   the first electrical storage device has a lower charging resistance than the second electrical storage device.

3. The turbo regeneration system according to claim 2, further comprising
   a switching device that performs switching of causing the first electrical storage device and the second electrical storage device to enter a connected state or a non-connected state.

4. The turbo regeneration system according to claim 3, wherein the switching device comprises
   a first switching unit that performs switching of causing the first electrical storage device and the turbo regenerative generator to enter a connected state or a non-connected state, and
   a second switching unit that performs switching of causing the second electrical storage device and the turbo regenerative generator to enter a connected state or a non-connected state.

5. The turbo regeneration system according to claim 4, wherein
   the first switching unit is able to perform switching of causing the first electrical storage device and the compressor system to enter the connected state or the non-connected state, and
   in a case where the turbo regenerative generator is not performing power generation, the first electrical storage device and the compressor system are caused to enter the connected state through the first switching unit, and the second electrical storage device and the turbo regenerative generator are caused to enter the non-connected state through the second switching unit.

6. The turbo regeneration system according to claim 4, wherein in a case where power generation of the turbo regenerative generator is smaller than a predetermined value, the first electrical storage device and the turbo regenerative generator are caused to enter the non-connected state through the first switching unit, and the second electrical storage device and the turbo regenerative generator are caused to enter the connected state through the second switching unit.

7. The turbo regeneration system according to claim 4, wherein in a case where power generation of the turbo regenerative generator is larger than a predetermined value, the first electrical storage device and the turbo regenerative generator are caused to enter the connected state through the first switching unit, and the second electrical storage device and the turbo regenerative generator are caused to enter the connected state through the second switching unit.

8. The turbo regeneration system according to claim 1, wherein
   a voltage of the electricity storage system is larger than a voltage of the auxiliary machine electrical system, and
   the auxiliary machine electrical system includes a DCDC converter that converts high voltage power from the electricity storage system to low voltage power and supplies the low voltage power to the auxiliary machine.

9. The turbo regeneration system according to any one of claims 2 to 7, wherein
   a voltage of the electricity storage system is larger than a voltage of the auxiliary machine electrical system,
   the auxiliary machine electrical system includes a DCDC converter that converts high voltage power from the electricity storage system to low voltage power and supplies the low voltage power to the auxiliary machine, and
   electric power is supplied from the second electrical storage device to the electric motor section in a case where at least one of a charging rate and a voltage of the first electrical storage device is equal to or less than a predetermined value.

10. The turbo regeneration system according to any one of claims 2 to 7, wherein
    a voltage of the electricity storage system is larger than a voltage of the auxiliary machine electrical system,
    the auxiliary machine electrical system includes a DCDC converter that converts high voltage power from the electricity storage system to low voltage power and supplies the low voltage power to the auxiliary machine, and
    the turbo regeneration system further comprises a third switching unit that performs switching of causing the turbo regenerative generator and the electric motor section to enter a connected state or a non-connected state.

11. The turbo regeneration system according to any one of claims 2 to 7, wherein

a voltage of the electricity storage system is larger than a voltage of the auxiliary machine electrical system,
the auxiliary machine electrical system includes a DCDC converter that converts high voltage power from the electricity storage system to low voltage power and supplies the low voltage power to the auxiliary machine,
the turbo regeneration system further comprises a traveling drive system connected in parallel to the turbine system,
the traveling drive system includes a traveling motor installed on a drive shaft of a vehicle, and
a charging rate of the first electrical storage device during the turbo regeneration by the turbine system is set to be equal to or less than an upper limit value of the charging rate of the first electrical storage device.

12. The turbo regeneration system according to any one of claims 2 to 7, wherein the second electrical storage device has a larger capacity than the first electrical storage device.

# FIG. 1

# FIG. 2

1A

16

| | | | |
|---|---|---|---|
| 132 | 122 | 171 | |

SECOND BATTERY DEVICE

AUXILIARY MACHINE

TURBO REGENERATIVE GENERATOR

ELECTRIC MOTOR SECTION

FIRST BATTERY DEVICE

181

182

TURBINE

COMPRESSION MECHANISM SECTION

131

121

AUXILIARY MACHINE ELECTRICAL SYSTEM

TURBINE SYSTEM

COMPRESSOR SYSTEM

ELECTRICITY STORAGE SYSTEM

18

13

12

17

# FIG. 3

1B

16

| 183 | 132 | 122 | 173 |
|---|---|---|---|

SECOND BATTERY DEVICE
181

AUXILIARY MACHINE
182

TURBO REGENERATIVE GENERATOR

TURBINE
131

ELECTRIC MOTOR SECTION

COMPRESSION MECHANISM SECTION
121

FIRST BATTERY DEVICE
171

AUXILIARY MACHINE ELECTRICAL SYSTEM
18B

TURBINE SYSTEM
13

COMPRESSOR SYSTEM
12

ELECTRICITY STORAGE SYSTEM
17B

# FIG. 4

CONTROLLER 200

| Sensors | Controller Units | Outputs |
|---|---|---|
| FIRST VOLTAGE SENSOR 401 | CHARGING NECESSITY DETERMINING UNIT 201 | FIRST SWITCH 173 |
| SECOND VOLTAGE SENSOR 402 | STOP DETERMINING UNIT 202 | SECOND SWITCH 183 |
| FIRST CURRENT SENSOR 403 | ENGINE CONTROL UNIT 203 | TURBO REGENERATIVE GENERATOR 132 |
| SECOND CURRENT SENSOR 404 | MODE SETTING UNIT 204 | ELECTRIC MOTOR SECTION 122 |
| VEHICLE SPEED SENSOR 405 | CHARGING RATE DETERMINING UNIT 211 | AUXILIARY MACHINE 182 |
| ECU 300 | SWITCH CONTROL UNIT 212 | FIRST BATTERY DEVICE 171 |
| ENGINE ROTATING SPEED SENSOR 301 | CHARGING POWER ESTIMATING UNIT 213 | SECOND BATTERY DEVICE 181 |
| | BATTERY CURRENT ESTIMATING UNIT 214 | |
| | CHARGING POWER DETERMINING UNIT 215 | |
| | OUTPUT-UP DETERMINING UNIT 216 | |
| | CROSS FLOW DETERMINING UNIT 219 | |

# FIG. 5

(a)

| FIRST BATTERY DEVICE | | SECOND BATTERY DEVICE | | PARALLEL CONNECTION CHECK FLAG |
|---|---|---|---|---|
| IS CHARGING NECESSARY? | IS CHARGING RATE UPPER LIMIT OR MORE? | IS CHARGING NECESSARY? | IS CHARGING RATE UPPER LIMIT OR MORE? | |
| YES | — | YES | — | FLAG ON |
| NO | — | YES | — | FLAG OFF |
| YES | — | NO | — | FLAG OFF |
| NO | NO | NO | NO | FLAG ON |
| NO | — | NO | YES | FLAG OFF |
| NO | YES | NO | — | FLAG OFF |

(b)
−FIRST TABLE−

| FIRST BATTERY DEVICE | | SECOND BATTERY DEVICE | | SWITCH CONTROL |
|---|---|---|---|---|
| IS CHARGING NECESSARY? | IS CHARGING RATE UPPER LIMIT OR MORE? | IS CHARGING NECESSARY? | IS CHARGING RATE UPPER LIMIT OR MORE? | |
| NO | — | YES | — | FIRST SWITCH OFF SECOND SWITCH ON |
| YES | — | NO | — | FIRST SWITCH ON SECOND SWITCH OFF |
| NO | NO | NO | YES | FIRST SWITCH ON SECOND SWITCH OFF |
| NO | YES | NO | — | FIRST SWITCH OFF SECOND SWITCH ON |

# FIG. 6

GENERATED POWER PG OF TURBO REGENERATIVE GENERATOR −POWER CONSUMPTION PC OF ELECTRIC MOTOR SECTION [W]

Dt

0

ENGINE ROTATING SPEED [rpm]

# FIG. 7

## -SECOND TABLE-

| No. | IS THERE POSSIBILITY OF OCCURRENCE OF CROSS CURRENT? | CHARGING POWER | IS CHARGING NECESSARY? | SWITCH CONTROL COMMAND |
|---|---|---|---|---|
| 1 | NO | THRESHOLD VALUE OR LESS | YES | FIRST SWITCH ON SECOND SWITCH ON |
| 2 | NO | THRESHOLD VALUE OR LESS | NO | FIRST SWITCH OFF SECOND SWITCH ON |
| 3 | NO | MORE THAN THRESHOLD VALUE | — | FIRST SWITCH ON SECOND SWITCH ON |
| 4 | YES | THRESHOLD VALUE OR LESS | — | FIRST SWITCH OFF SECOND SWITCH ON |
| 5 | YES | MORE THAN THRESHOLD VALUE | YES | FIRST SWITCH OFF SECOND SWITCH ON |
| 6 | YES | MORE THAN THRESHOLD VALUE | NO | FIRST SWITCH ON SECOND SWITCH OFF |

# FIG. 8

```
                          ┌──────────┐
                          │  START   │
                          └──────────┘
                                │
                                ▼                           S100
              ┌────────────────────────────────────────┐
         N    │   IS IT NECESSARY TO CHARGE              │
    ┌─────────│   FIRST BATTERY DEVICE OR                │
    │         │   SECOND BATTERY DEVICE?                 │
    │         └────────────────────────────────────────┘
    │                              │ Y
    ▼                              │
  ┌──────────────┐  S115           │
N │ IS VEHICLE   │                 │
┌─│ IN STOP STATE?│                │
│ └──────────────┘                 │
│         │ Y                      │
│         ▼         S120           ▼            S110
│  ┌──────────────┐        ┌──────────────┐
│  │  ENGINE OFF  │        │  ENGINE ON   │
│  └──────────────┘        └──────────────┘
│         │                       │
│         │                       │
└─────────┴───────────────────────┤
                                   │
                                   ▼              S130
                        ┌────────────────┐
              N         │    P≥0 ?        │
         ┌──────────────│                │
         │              └────────────────┘
         │                      │ Y
         ▼       S150           ▼        S140
  ┌──────────────┐       ┌──────────────┐
  │ DISCHARGING  │       │  CHARGING    │
  │    MODE      │       │    MODE      │
  └──────────────┘       └──────────────┘
         │                      │
         └──────────────────────┤
                                ▼
                          ┌──────────┐
                          │   END    │
                          └──────────┘
```

# FIG. 9

CHARGING MODE

SET PARALLEL
CONNECTION CHECK FLAG ⟋S1410

IS PARALLEL
CONNECTION CHECK FLAG ON? ⟋S1420

N

Y

CALCULATE
CHARGING POWER ⟋S1430

ESTIMATE POSSIBILITY OF
OCCURRENCE OF CROSS CURRENT ⟋S1440

SWITCH CONTROL BASED
ON FIRST TABLE ⟋S1460

SWITCH CONTROL BASED
ON SECOND TABLE ⟋S1450

RETURN

# FIG. 10

```
        ( DISCHARGING )
        (    MODE     )
              |
              |                        S1510
              v
   ┌──────────────────────┐
   │  FIRST SWITCH ON AND  │
   │   SECOND SWITCH OFF   │
   └──────────────────────┘
              |
              |                        S1520
   N          v
 ┌──────< IS IT NECESSARY >
 │        < TO INCREASE OUTPUT? >
 │              |
 │              | Y
 │              |                      S1530
 │              v                  N
 │        < IS ENGINE IN OFF STATE? >──────┐
 │              |                          │
 │              | Y                        │
 │              |            S1540         │        S1550
 │              v                          v
 │   ┌──────────────────┐       ┌──────────────────────┐
 │   │  TURN ON ENGINE  │       │   INCREASE ENGINE    │
 │   └──────────────────┘       │   ROTATING SPEED     │
 │              |               └──────────────────────┘
 │              |                          │
 └──────────────┼──────────────────────────┘
                v
           (  RETURN  )
```

# FIG. 11

1C

16

183

186

**DCDC CONVERTER**

**SECOND BATTERY DEVICE**

181

**AUXILIARY MACHINE**

182

**AUXILIARY MACHINE ELECTRICAL SYSTEM**

18C

132

**TURBO REGENERATIVE GENERATOR**

**TURBINE**

131

**TURBINE SYSTEM**

13

122

**ELECTRIC MOTOR SECTION**

**COMPRESSION MECHANISM SECTION**

121

**COMPRESSOR SYSTEM**

12

173

171

**FIRST BATTERY DEVICE**

**ELECTRICITY STORAGE SYSTEM**

17B

# FIG. 12

CONTROLLER 200C

| | | |
|---|---|---|
| FIRST VOLTAGE SENSOR 401 | CHARGING NECESSITY DETERMINING UNIT 201 | FIRST SWITCH 173 |
| SECOND VOLTAGE SENSOR 402 | STOP DETERMINING UNIT 202 | SECOND SWITCH 183 |
| FIRST CURRENT SENSOR 403 | ENGINE CONTROL UNIT 203 | TURBO REGENERATIVE GENERATOR 132 |
| SECOND CURRENT SENSOR 404 | MODE SETTING UNIT 204 | ELECTRIC MOTOR SECTION 122 |
| VEHICLE SPEED SENSOR 405 | CHARGING RATE DETERMINING UNIT 211 | AUXILIARY MACHINE 182 |
| ECU 300 | SWITCH CONTROL UNIT 212 | FIRST BATTERY DEVICE 171 |
| ENGINE ROTATING SPEED SENSOR 301 | CHARGING POWER ESTIMATING UNIT 213 | SECOND BATTERY DEVICE 181 |
| | BATTERY CURRENT ESTIMATING UNIT 214 | |
| | CHARGING POWER DETERMINING UNIT 215 | |
| | OUTPUT-UP DETERMINING UNIT 216 | |
| | CROSS FLOW DETERMINING UNIT 219 | |
| | VOLTAGE ADJUSTING UNIT 317 | |

# FIG. 13

START

S100

IS IT NECESSARY TO CHARGE
FIRST BATTERY DEVICE OR
SECOND BATTERY DEVICE?

N
Y

S115
IS VEHICLE
IN STOP STATE?
N
Y

S205
IS ENGINE
IN OFF STATE?
N
Y

S120
ENGINE OFF

S110
ENGINE ON

S215
INCREASE ENGINE
ROTATING SPEED

S130
$P \geq 0$ ?
N
Y

S233
$Cp \geq Cp2$ ?
N
Y

S236
ADJUST VOLTAGE

S150
DISCHARGING MODE

S140
CHARGING MODE

RETURN

# FIG. 14

1D

16    193

183

186

DCDC
CONVERTER

132

TURBO
REGENERATIVE
GENERATOR

122

ELECTRIC
MOTOR
SECTION

173

171

FIRST
BATTERY
DEVICE

SECOND
BATTERY
DEVICE

AUXILIARY
MACHINE

TURBINE

COMPRESSION
MECHANISM
SECTION

181    182    131    121

AUXILIARY MACHINE
ELECTRICAL SYSTEM

TURBINE
SYSTEM

COMPRESSOR
SYSTEM

ELECTRICITY
STORAGE SYSTEM

18C    13    12    17B

# FIG. 15

1E

16

183

186

DCDC CONVERTER

132

TURBO REGENERATIVE GENERATOR

TURBINE

131

122

ELECTRIC MOTOR SECTION

COMPRESSION MECHANISM SECTION

121

192

INVERTER

TRAVELING MOTOR (G/M)

191

173

171

FIRST BATTERY DEVICE

SECOND BATTERY DEVICE

181

AUXILIARY MACHINE

182

AUXILIARY MACHINE ELECTRICAL SYSTEM

18C

TURBINE SYSTEM

13

COMPRESSOR SYSTEM

12

DRIVE SYSTEM

19

ELECTRICITY STORAGE SYSTEM

17B

# FIG. 16

**200E**

CONTROLLER

| Left sensors | Controller units | Right devices |
|---|---|---|
| 401 FIRST VOLTAGE SENSOR | 201 CHARGING NECESSITY DETERMINING UNIT | 173 FIRST SWITCH |
| 402 SECOND VOLTAGE SENSOR | 202 STOP DETERMINING UNIT | 183 SECOND SWITCH |
| 403 FIRST CURRENT SENSOR | 203 ENGINE CONTROL UNIT | 132 TURBO REGENERATIVE GENERATOR |
| 404 SECOND CURRENT SENSOR | 204E MODE SETTING UNIT | 122 ELECTRIC MOTOR SECTION |
| 405 VEHICLE SPEED SENSOR | 211E CHARGING RATE DETERMINING UNIT | 182 AUXILIARY MACHINE |
| 300 ECU | 212E SWITCH CONTROL UNIT | 171 FIRST BATTERY DEVICE |
| 301 ENGINE ROTATING SPEED SENSOR | 213 CHARGING POWER ESTIMATING UNIT | 181 SECOND BATTERY DEVICE |
|  | 214 BATTERY CURRENT ESTIMATING UNIT | 192 INVERTER |
|  | 215 CHARGING POWER DETERMINING UNIT |  |
|  | 216 OUTPUT-UP DETERMINING UNIT |  |
|  | 219 CROSS FLOW DETERMINING UNIT |  |
|  | 317 VOLTAGE ADJUSTING UNIT |  |

# FIG. 17

```
                              START
                                │
                                ▼
                          ┌─────────────┐  S400
                          ⟨   P≥0 ?     ⟩──── N ────────┐
                          └─────────────┘               │
                                │ Y                      ▼
                                │                  ┌──────────────────┐  S420
                                │                  ⟨ IS DECELERATION  ⟩─── N ──────┐
                                │                  ⟨ REGENERATION BEING⟩           │
                                │                  ⟨ PERFORMED?       ⟩            ▼
                                │                  └──────────────────┘      ┌──────────────┐  S440
                                │                        │ Y                 ⟨ IS VEHICLE   ⟩── N ──────┐
                                │                        │                   ⟨ IN STOP STATE?⟩          │
                                │                        │                   └──────────────┘           ▼
                                │                        │                         │ Y          ┌────────────────┐  S460
                                │                        │                         │            ⟨ IS IT NECESSARY⟩── N ──┐
                                │                        │                         │            ⟨ TO CHARGE FIRST⟩       │
                                │                        │                         │            ⟨ BATTERY DEVICE?⟩       │
                                │                        │                         │            └────────────────┘       │
                                │                        │                         │                  │ Y  S470           │
                                ▼ S410                   ▼ S430                    ▼ S450             ▼                    ▼ S480
                        ┌──────────────┐        ┌──────────────┐         ┌──────────────┐   ┌──────────────────┐  ┌──────────────┐
                        │    TURBO     │        │ DECELERATION │         │  IDLE STOP   │   │ ENGINE DRIVING   │  │   POWERING   │
                        │ REGENERATION │        │ REGENERATION │         │ DISCHARGING  │   │     MODE         │  │ DISCHARGING  │
                        │CHARGING MODE │        │CHARGING MODE │         │    MODE      │   └──────────────────┘  │    MODE      │
                        └──────────────┘        └──────────────┘         └──────────────┘            │           └──────────────┘
                                │                        │                       │                    │                  │
                                ▼                        │                       │                    │                  │
                             END                         └───────────────────────┴────────────────────┴──────────────────┘
```

# FIG. 18

1F

16

186
**DCDC CONVERTER**

182
**AUXILIARY MACHINE**

AUXILIARY MACHINE
ELECTRICAL SYSTEM

18F

132
**TURBO REGENERATIVE GENERATOR**

**TURBINE**

18

TURBINE
SYSTEM

13

122
**ELECTRIC MOTOR SECTION**

**COMPRESSION MECHANISM SECTION**

18

COMPRESSOR
SYSTEM

12

171
**FIRST BATTERY DEVICE**

ELECTRICITY
STORAGE SYSTEM

17

## FIG. 19

200F

CONTROLLER

| FIRST VOLTAGE SENSOR | 401 |

| CHARGING NECESSITY DETERMINING UNIT | 201 |

| SECOND VOLTAGE SENSOR | 402 |

| STOP DETERMINING UNIT | 202 |

| FIRST CURRENT SENSOR | 403 |

| ENGINE CONTROL UNIT | 203 |

| SECOND CURRENT SENSOR | 404 |

| CHARGING RATE DETERMINING UNIT | 211 |

| VEHICLE SPEED SENSOR | 405 |

| ECU | 300 |

| ENGINE ROTATING SPEED SENSOR | 301 |

| VOLTAGE ADJUSTING UNIT | 317 |

| TURBO REGENERATIVE GENERATOR | 132 |

| ELECTRIC MOTOR SECTION | 122 |

| AUXILIARY MACHINE | 182 |

| FIRST BATTERY DEVICE | 171 |

| SECOND BATTERY DEVICE | 181 |

# FIG. 20

START

S200

IS IT NECESSARY TO
CHARGE FIRST BATTERY DEVICE?

N ← / Y ↓

S115
IS VEHICLE
IN STOP STATE?

N / Y

S205
IS ENGINE
IN OFF STATE?

Y / N →

S120
ENGINE OFF

S110
ENGINE ON

S215
INCREASE ENGINE
ROTATING SPEED

S233
$Cp \geq Cp2$ ?

Y / N

S236
ADJUST VOLTAGE

RETURN

## INTERNATIONAL SEARCH REPORT

| International application No. |
|---|
| PCT/JP2015/079202 |

### A. CLASSIFICATION OF SUBJECT MATTER

*F02B41/10*(2006.01)i, *B60K6/48*(2007.10)i, *B60R16/033*(2006.01)i, *B60W10/26* (2006.01)i, *B60W20/00*(2016.01)i, *F02D23/00*(2006.01)i

According to International Patent Classification (IPC) or to both national classification and IPC

### B. FIELDS SEARCHED

Minimum documentation searched (classification system followed by classification symbols)
F02B41/10, B60K6/48, B60R16/033, B60W20/00, F02D23/00

Documentation searched other than minimum documentation to the extent that such documents are included in the fields searched
Jitsuyo Shinan Koho       1922-1996   Jitsuyo Shinan Toroku Koho   1996-2015
Kokai Jitsuyo Shinan Koho   1971-2015   Toroku Jitsuyo Shinan Koho   1994-2015

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2006-242154 A  (Misuzu Industries Corp.,<br>JTEKT Corp.),<br>14 September 2006 (14.09.2006),<br>paragraphs [0022], [0025] to [0037]; fig. 3<br>(Family: none) | 1<br>2-12 |
| Y | JP 2011-144772 A  (Mitsubishi Electric Corp.),<br>28 July 2011 (28.07.2011),<br>paragraphs [0018] to [0027]; fig. 2<br>& US 2011/0174278 A1<br>fig. 2; paragraphs [0043] to [0065]<br>& DE 102010054332 A1 | 1-12 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>11 December 2015 (11.12.15) | Date of mailing of the international search report<br>22 December 2015 (22.12.15) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

45

**INTERNATIONAL SEARCH REPORT**

International application No.

PCT/JP2015/079202

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2009-299522 A  (IHI Corp.),<br>24 December 2009 (24.12.2009),<br>paragraph [0034]; fig. 6<br>& US 2011/0146274 A1<br>fig. 8; paragraph [0044]<br>& WO 2009/150884 A1      & EP 2309102 A1<br>& KR 10-2011-0004473 A   & CN 102057138 A | 1-12 |
| Y | JP 2015-33859 A  (Sanyo Electric Co., Ltd.),<br>19 February 2015 (19.02.2015),<br>paragraphs [0018] to [0020]; fig. 6, 8<br>(Family: none) | 4-7,9-12 |
| Y | JP 2015-61424 A  (Autonetworks Technologies,<br>Ltd., Sumitomo Wiring Systems, Ltd., Sumitomo<br>Electric Industries, Ltd.),<br>30 March 2015 (30.03.2015),<br>fig. 1, 4<br>(Family: none) | 4-12 |
| Y | JP 2014-12465 A  (Hitachi Automotive Systems,<br>Ltd.),<br>23 January 2014 (23.01.2014),<br>paragraphs [0036] to [0053]; fig. 7 to 14<br>& WO 2014/007031 A1 | 5-7,9-12 |
| Y | JP 2015-42509 A  (Mitsubishi Motors Corp.),<br>05 March 2015 (05.03.2015),<br>paragraphs [0001], [0027]; fig. 3<br>(Family: none) | 8-11 |
| Y | JP 2015-9655 A  (Sanyo Electric Co., Ltd.),<br>19 January 2015 (19.01.2015),<br>paragraphs [0002] to [0004], [0020]; fig. 1<br>(Family: none) | 11 |
| Y | JP 2011-230618 A  (Denso Corp.),<br>17 November 2011 (17.11.2011),<br>paragraphs [0032], [0052]; fig. 1<br>(Family: none) | 11 |

## REFERENCES CITED IN THE DESCRIPTION

**Patent documents cited in the description**

- JP 2004270602 A
- JP 2005083798 A
- JP 2002189066 A

**Non-patent literature cited in the description**

- Shuichi Adachi and Ichiro Murata Log: Basics of Kalman filter. Tokyo Denki University Press, 10 March 2013
- Atsuo Kawamura: trial production and performance evaluation test of Eco-future electric vehicle. *Denso Technical Review,* 2011